# EUROPEAN PATENT SPECIFICATION

(11) **EP 0 774 200 B1**
(45) Date of publication and mention of the grant of the patent: **23.07.2003**
(21) Application number: 96914439.3
(22) Date of filing: 24.05.1996
(51) Int. Cl.: A01B 33/02, A01B 51/02

(54) **FARM WORKING MACHINE**
LANDWIRTSCHAFTLICHE ARBEITSMASCHINE
MACHINE AGRICOLE

(30) Priority: 24.05.1995 JP 12548595; 24.05.1995 JP 12548695; 24.05.1995 JP 12548795; 24.05.1995 JP 12548895; 24.05.1995 JP 12548995; 24.05.1995 JP 12549095; 09.04.1996 JP 8693096; 09.04.1996 JP 8693196; 16.04.1996 JP 9418796
(43) Date of publication of application: 21.05.1997
(73) Proprietor: YANMAR AGRICULTURAL EQUIPMENT CO., LTD., Osaka-fu 530-0013 (JP)
(72) Inventor: UEMURA, Keiji, c/o Yanmar Agri. Equipment Co.,Ltd., Osaka-shi, Osaka 530 (JP); NOCHI, Susumu, c/o Yanmar Agri. Equipment Co.,Ltd., Osaka-shi, Osaka 530 (JP); KOUMOTO, Isamu, c/o Yanmar Agri.Equipment Co.,Ltd., Osaka-shi, Osaka 530 (JP); HAYATA, Hiromitsu, c/o Yanmar Agri. Equipm.Co.Ltd., Osaka-shi, Osaka 530 (JP); NAKANO, Masanori, c/o Yanmar Agri.Equipm. Co.,Ltd., Osaka-shi, Osaka 530 (JP)
(74) Representative: Charlton, Peter John
(86) International application number: JP9601405
(87) International publication number: WO96037092

(56) References cited:
- FR-A- 2 470 520
- GB-A- 1 022 548
- JP-B- 32 005 003
- JP-B- 36 007 303
- JP-Y- 3 037 361
- US-A- 2 827 842
- US-A- 3 986 573
- US-A- 4 214 632
- US-A- 4 249 612
- US-A- 4 519 459
- US-A- 4 699 219
- US-A- 5 146 997

## Description

### Field of the Invention

The present invention relates to an agricultural machine, mainly of a walking type which is adapted to perform a tilling work, various management work and the like.

### Description of Related Art

In the convention, this type of agricultural machine is widely known, in the Japanese Patent Application Laid-Open No. 62-234736 (1987), for example, wherein commonly, an engine K is mounted on a front upper portion of a machine body J and a rotary tiller R is coupled to a rear portion of the machine body J, arranging the engine K, an axle S and a rotor shaft V in this order from the front along the front-rear horizontal direction of the machine body J, as shown in FIG. 51.

However, in the prior art, the engine K, the axle S and the rotor shaft V are arranged in this order along the front-rear horizontal direction of the machine body J with arranging the engine K on the front portion of the residual two while ensuring the front-rear space between the axle S and the rotor shaft V, hence there are such problems that the front-rear length of the overall agricultural machine is increased, and the engine K at the front portion is a hindrance to see the state of the ground immediately under the front portion in a traveling direction so that the front view is interrupted.

Further, since the engine K is positioned far frontward from the rotor shaft V as well as the tiller R, whereby the weight of the engine K cannot be sufficiently applied to the tiller R, there are also such problems that the working performance is deteriorated because biting of tillage tines into the ground is inferior or the like due to the small balance weight of the tiller R, and that the weight of the rotary tiller R itself must be increased owing to inferior biting of the tillage tines into the ground.

When a handle part is raised up for the purpose of floating the rear rotary tiller R on turn of the machine body J, there occurs such a problem that an engine frame supporting the front engine K can come into contact with the soil to hinder a smooth turn operation, and, consequently, to avoid this problem, it is necessary to set the engine frame at a high position for keeping the engine K itself at a high position, also leading to such a problem that the machine body J has a high center of gravity.

Further, traveling wheels float up by reactive force from the tillage tines to readily result in the so-called dashing phenomenon, and hence it is necessary to remarkably project the engine K for increasing the front weight or specially carry a front weight, leading to such a problem that stability and handle-ability of the machine body J are deteriorated.

An object of the present invention is to provide an agricultural machine which can attain reduction in the overall length, enlargement of the view and lowering of the center of gravity, and which can improve working performance and stability and handle-ability of its machine body.

### Summary of the Invention

The present invention is directed to an agricultural machine comprising an engine, an axle supporting a travelling wheel, and a rotor shaft provided with a rotary tiller and driven by the engine on a machine body, wherein the engine, axle and rotor shaft are arranged along the front-rear horizontal direction of the machine body in order of the rotor shaft, the engine and the axle, and characterised by a transmission casing containing a transmission to which power from the engine is inputted, and a casing containing rotary power transmission means for taking power from the transmission to the rotor shaft in a branched manner, the casing being arranged in a substantially horizontal manner along a line segment (L) connecting the axle with the rotor shaft.

Due to such a structure, the total height can be further lowered and the overall center of gravity can be further reduced so that downsizing of the whole device and enlargement of the front view can be further attained, while stability and handle-ability of the machine body can be further improved.

The engine can be arranged in a clearance part ensured in front of and at the back of the rotor shaft and the axle due to the arrangement in such order, whereby the overall front-rear length can be decreased, while the front view is not interrupted by the engine but can be enlarged since the engine is not positioned on a front part of the machine body.

Further, the engine is positioned between the rotor shaft and the axle, whereby the weight of the engine can be satisfactorily applied to both the axle and the rotor shaft so that the front-rear balance of the machine body can be improved, while the weight of the engine can be sufficiently applied also to the rotor shaft in addition to the axle such that the balance in weight of the rotor shaft can be increased to provide better bite of tillage tines into the ground, and hence working performance can be improved.

Since the engine is provided between the rotor shaft and the axle, further, a frame supporting the engine does not come into contact with the soil in turn dissimilarly to the prior art, whereby the height of the engine above the ground need not be increased beyond necessity and the overall center of gravity can be lowered.

Since the rotor shaft, the engine and the axle are arranged in this order, in addition, force pressing the axle downward acts by reactive force from the tillage tines, and it is not necessary to specially carry an auxiliary weight. Thus, stability and handle-ability of the machine body can be improved, while it is also possible to make dashing hard to occur.

In the present invention, further, the rotary tiller and the engine may be arranged in a relation overlapping with each other as viewed in a plan view.

Due to such a structure, the overall front-rear length can be further reduced while the weight of the engine can be sufficiently applied to the rotary tiller, so that the balance weight of the rotary tiller can be increased to attain better working performance such as bite of the tillage tines into the ground.

According to the present invention, further, the rotary tiller may have a rotary cover, and the rotary cover and the engine may be supported by a common frame.

Due to such a structure, the engine and the rotary cover can be supported more compactly and at a lower cost than that independently supporting the engine and the rotary cover by an engine frame and a rotary frame respectively, and the overall front-rear length can be shortened.

Besides, since the engine and the rotary cover are supported by the common frame, the distance between the engine and the rotary tiller can be made closer and the weight of the engine can be sufficiently applied to the rotary tiller, whereby the working performance can be improved such that the balance weight of the rotary tiller can be increased and the bite of the tillage tines into the ground can be improved.

Moreover, since the engine and the rotary cover are supported by the common frame, vibration of the engine can be sufficiently transmitted to the rotary cover. Because of this, soil is hard to adhere to the inner surface of the rotary cover in a tilling operation. Even when soil adheres, it can be shook down by vibration of the engine, whereby a smooth tilling work can be performed.

According to the present invention, a ridge plower for moving cultivated soil tilled by the rotary tiller sideward to plow a ridge may be provided between the rotary tiller and the traveling wheel.

With this structure, in a conventional agricultural machine, the ridge plower is mounted on the back of a machine body, i.e., on the back of a rotary tiller through a rear hitch metal fitting of a support metal fitting, or the like and the ridge plower can be adjusted by adjusting a handle height in the vertical direction. In the present invention, however, the tilling depth of the rotary tiller cannot be reliably adjusted due to hindrance by the ridge plower in such adjustment of the tilling depth, assuming that the ridge plower is mounted on the back of the traveling wheel, because adjustment of the tilling depth by the rotary tiller is performed by adjusting the handle height in the vertical direction for inclining the machine body in the vertical direction about the traveling wheel in a tilling operation by the rotary tiller. Particularly in the case where the tilling depth by the rotary tiller is shallowly adjusted, the rotary tiller cannot be pressed down due to the presence of the ridge plower when the position of the handle is lowered for pressing a rear part side of the machine body downward about the traveling wheel and hence the tilling depth by the rotary tiller cannot be deeply adjusted.

Therefore, the ridge plower is rendered to be arranged between the rotary tiller and the traveling wheel and the machine body is inclined in the vertical direction about the traveling wheel in a tilling operation for making the digging depth of the rotary tiller into the ground arranged on the front side of the traveling wheel adjustable, so that the ridge plower forms no hindrance at the time of adjusting the tilling depth of the rotary tiller and a ridge plowing operation by the ridge plower can be efficiently performed with the tilling operation.

According to the present invention, the machine may further comprise an elevational wheel whose support height with respect to the machine body is rendered changeable between a working height and a non-working height, and the elevational wheel is supported through a swing arm pivotally supported by the machine body, whereby the support height of the elevational wheel is made changeable with changing a swing angle of the swing arm.

Due to such a structure, the support height of the elevational wheel changes by changing the swing angle of the swing arm, so that the elevational wheel can be changed between the working height and the non-working height. The swing arm swings about a pivotal point of the machine body and the height of the elevational wheel is changed through this swing arm, whereby a bad influence by ground biting or the like less than the conventional one which directly changes the support height of the elevational wheel by a sliding rod.

While the swing angle of the swing arm varies with the working height and the non-working height, it is also possible to eliminate such a phenomenon that an upper part of the rod in the conventional one unpreparedly projects to the exterior before and after changing the heights.

Further, while the rod extends toward an oblique rear lower part on a rear part of the machine body in the conventional one and hence a touchdown point of the elevational wheel moves to a rear portion of the machine body, and is a long distance with the touchdown point of the traveling wheel and front and rear wheel bases are lengthened, thereby making it hard to move and turn in a non-working time including movement, in the abovementioned structure, the horizontal distance between the touchdown point of the elevational wheel and the pivotal point of the swing arm is short and the front and rear wheel bases between the elevational wheel and the machine body side are short, in a non-working time when the elevational wheel is downed whereby the machine body is easily moved and turned.

According to the present invention, further, the machine may further comprise a clutch mechanism transmitting power from the engine to the axle, a handle having right and left handle base parts extending from the machine body and a grip part coupling free ends of the handle base parts, and a clutch lever which is held by the handle for switching on and off the clutch mechanism, wherein this clutch lever has an operating part which extends along the grip part and is approachable to and separable from the grip part, a grasp part overlapping with the grip part is formed on the operating part, and a non-overlapping part not mutually overlapping may be formed on at least one of the operating part of the clutch lever and the grip part of the handle.

Due to such a structure, it is possible to solve such a problem that a swing operation of the clutch lever toward the grip part side can not be reliably performed in the swing operation of the clutch lever toward the grip part due to hindrance by a hand grasping the grip part in the conventional machine, in case that both of the handle and the clutch lever are provided in the form of a continuous loop and the operating part of the clutch lever is provided in parallel with the grip part of the handle.

Namely, since the non-overlapping part not mutually overlapping is formed on at least one of the grip part of the handle and the operating part of the clutch lever, when an operator grasps the grip part of the handle with a single hand while grasping the grasp part of the operating part provided on the clutch lever with the other hand to swing this clutch lever in an approaching or separating direction with respect to the grip part of the handle for performing an on-off operation of the clutch mechanism, and hence the grasp part of the clutch lever and the grip part of the handle do not overlap with each other in such a part, and swing-operating of the clutch lever while positioning a single hand on the grip part on the non-overlapping part can perform the swing operation of the clutch lever toward the grip part with no hindrance by the hand grasping the grip part.

According to the present invention, the machine may further comprise a shift lever for changing the wheel speed and switching on and off the rotary tiller, a shifter shaft to be displaced in the axial direction in association with an operation of the shift lever, and a power transmission gear to be displaced in the axial direction following the axial displacement of the shifter shaft for changing a transmission path of power taken out toward an output side in response to the displaced position.

Due to such a structure, it is possible to excellently perform gear change or the like by operating the shift lever for moving the shifter shaft in the axial direction, displacing the power transmission gear in the axial direction following the operation, and changing the transmission path of the power taken out toward the output side.

Since the power transmission gear is directly provided on the shifter shaft, a shift fork is not required, and it is not necessary to weld this to the shaft, as compared with the conventional shift lever, i.e., that wherein a shift fork projecting radially outward is connected to a shifter shaft to be displaced in the axial direction in association with an operation of the shift lever by welding or the like, another shaft is arranged in parallel with the shifter shaft, and a power transmission gear connected with the shift fork is spline-coupled to this shaft, so that the power transmission gear provided on the other shaft through the shift fork connected with the shifter shaft is slided by operating the shift lever for changing the power transmission path in response to the slide position thereof, whereby gear change or the like is performed. Also there is no need to provide two shafts but a single shaft is sufficient, whereby the shifter mechanism can be simply and compactly structured and downsizing of the transmission case can be attained. In addition, there exists no shift fork dissimilarly to the prior art, whereby no wear or the like can be caused and the machine is superior also in durability.

According to the present invention, the machine may further comprise a power transmission mechanism for transmitting power to right and left axles, the power transmission mechanism having a differential mechanism, the differential mechanism comprising a primary side transmission member to which the power is inputted, a pair of right and left secondary side transmission members coupled to the right and left axles respectively, and a movable body provided between the primary side transmission member and the secondary side transmission members, and the movable body being movable between an engaging position where the power is transmitted to the respective axles by engaging the primary side transmission member with the secondary side transmission members and a releasing position where the transmission of the power to the power to the respective axles is cut off by releasing the engagement when a load acting on the secondary side transmission members is in excess of a predetermined level.

Due to such a structure, it is possible to ensure a smooth turning operation of the machine body by controlling rotation of a wheel on a side toward which the machine is to be turned, i.e., the right-side wheel in case of right turn or the left-side wheel in case of left turn, with respect to rotation of the opposite side wheel.

Namely, in a straight advance, each movable body interposed between the primary and secondary side transmission members is positioned on the engaging position for engaging the respective transmission members with each other, whereby it is possible to ensure straight advancement of the machine body by transmitting the power to the right and left wheels from the primary side transmission member through the movable body and the secondary side members.

In case of turning the machine body in the above state, a high torque suppressing the rotation acts on the wheel on the side supplied with the torque by a handle operation of the operator, whereby the movable body on the side supplied with this high torque retreats from the engaging position to the releasing position.

Therefore, the engagement between the primary side transmission member and the secondary side transmission members by the movable body is released, and power transmission from the primary side transmission member to the secondary side transmission member on the side supplied with the torque is cut off, whereby the rotation of the wheel on the side supplied with the torque is stopped. On the other hand, power transmission to the secondary side transmission member on the side supplied with no torque, i.e., the wheel is continued, whereby excellent turn of the machine body can be performed only by the handle operation.

The above power transmission mechanism may further comprise a locking mechanism, and the locking mechanism may comprise regulation means for regulating relative rotation of the right and left wheels.

The provision of such a locking mechanism eliminates inconveniences that can occur in case of providing no locking mechanism, i.e., such that engagement release of the movable body not intended by the operator is frequently performed and the straight traveling property of the machine body is exceedingly deteriorated when the difference between torques applied to the right and left wheels extremely fluctuates in straight traveling in a relatively coarse field or the like, and that a high torque is applied when the right and left wheels come into contact with a slope of a ridge, each movable body corresponding to each wheel moves to the releasing position, and power transmission to each wheel is cut off whereby ridge passage by the machine body cannot be made, in case of performing ridge passage of the machine body from one ridge completed in the operation to the next ridge. Thus a stable straight traveling property of the machine body can be ensured by locking by the locking mechanism even if the difference between the torques applied to the right and left wheels exceedingly varies, while ridge passage of the machine body can also be reliably performed.

As regulation means for the locking mechanism, the machine may comprise a presser for pressing the movable body in a direction where increasing engaging resistance increases between the primary side transmission member and the secondary side transmission members.

In this structure, the movable body can be held on the engaging position by pressing the movable body with the presser and increasing the engaging resistance between the primary and secondary side transmission members by this movable body, whereby locking and lock-release of the differential mechanism not intended by the operator are not frequently performed but ridge passage of the machine body can be reliably performed while a stable straight traveling property of the machine body can be ensured.

Further, the machine may comprise engaging parts formed on the pair of right and left secondary transmission members and an engaging body engaging with or disengaging from both of these engaging parts as the regulation means for the locking mechanism.

Due to such a structure, relative rotation of the right and left wheels can be reliably regulated by engaging with or disengaging from the engaging parts formed on the pair of right and left secondary transmission members by the engaging body.

Particularly in case of employing the presser, there is such a possibility that, when the difference between the torques applied to the right and left axles is extremely large, for example, the movable body pressed by the presser of the regulation means retracts from the engaging position to the releasing position by the large torque difference leading to an unintended locking release of the differential mechanism, causing the right and left secondary side transmission members to relatively rotate. In case of employing the engaging body, on the other hand, locking of the differential mechanism is performed by forcing the engaging body to engage with or disengage from the right and left engaging parts, whereby no locking release operation is performed without intention and reliable locking between the right and left secondary side transmission members can be performed even if the difference between the torques applied to the right and left axles is extremely large, resulting that a stable straight traveling property of the machine body can be further excellently ensured.

### Brief Description of the Drawings

FIG. 1 is a side view of an agricultural machine according to an embodiment of the present invention.
FIG. 2 is a plan view on the line X - X in FIG. 1.
FIG. 3 is a partially broken side view showing an embodiment of a traveling wheel shown in FIG. 1.
FIG. 4 is a sectional view along the line X - X in FIG. 3.
FIG. 5 is a perspective view showing a procedure of mounting a fuel tank shown in FIG. 1.
FIG. 6 is a perspective view showing a state of mounting of the fuel tank shown in FIG. 5.
FIG. 7 is a side view showing a principal part of a machine body shown in FIG. 1.
FIG. 8 is a plan view showing the principal part of the machine body shown in FIG. 1.
FIG. 9 is a plan view of a frame shown in FIG. 8 with certain parts omitted.
FIG. 10 is aside view of the frame shown in FIG. 9.
FIG. 11 is a perspective view of a residual disposer shown in FIG. 1.
FIG. 12 is a plan view showing a cover body of a rotary cover shown in FIG. 1.
FIG. 13 is a side view of the cover body shown in FIG. 12.
FIG. 14 is a side view showing a side cover of the rotary cover shown in FIG. 12.
FIG. 15 is a perspective view showing a ridge plower shown in FIG. 1.
FIG. 16 is a perspective view showing another embodiment of the ridge plower shown in FIG. 15.
FIG. 17 is a side view of an elevational wheel part shown in FIG. 1.
FIG. 18 is a plan view of the elevational wheel part shown in FIG. 17.
FIG. 19 is a perspective view of the elevational wheel part shown in FIG. 17.
FIG. 20 is a side view showing a modification of a support structure for the elevational wheel shown in FIG. 17.
FIG. 21 is a side view showing another embodiment of the elevational wheel shown in FIG. 17.
FIG. 22 is an enlarged side view of a swing arm of the elevational wheel shown in FIG. 21 with certain parts omitted.
FIG. 23 is an enlarged side view showing a lock arm of the elevational wheel shown in FIG. 21.
FIG. 24 is an internal structure diagram showing a clutch mechanism shown in FIG. 1.
FIG. 25 is a plan view showing another embodiment of a clutch lever shown in FIG. 1.
FIG. 26 is a plan view showing another embodiment of the clutch levers shown in FIG. 1 and FIG. 25.
FIG. 27 is an internal structure diagram of a power transmission part in the machine body shown in FIG. 1.
FIG. 28 is a development sectional view along the line Y - Y in FIG. 27.
FIG. 29 is a partially omitted side view showing a shift lever shown in FIG. 1.
FIG. 30 is a front view of a guide plate for guiding the shift lever shown in FIG. 29.
FIG. 31 is a sectional view of a detent part in a shifter shaft shown in FIG. 27.
FIG. 32 is a sectional view of a power transmission gear part in the shifter shaft shown in FIG. 27.
FIG. 33 is an assembly drawing of the power transmission gear part in the shifter shaft shown in FIG. 32.
FIG. 34 is a gear state diagram at a rotary-off and low speed advance time in the power transmission part shown in FIG. 28.
FIG. 35 is a gear state diagram at a rotary-on and low speed advance time in the power transmission part shown in FIG. 28.
FIG. 36 is a gear state diagram at a rotary-off and low speed reverse traveling time in the power transmission part shown in FIG. 28.
FIG. 37 is a gear state diagram at a rotary-on and low speed reverse traveling time in the power transmission part shown in FIG. 28.
FIG. 38 is a gear state diagram at a rotary-off and high speed advance time in the power transmission part shown in FIG. 28.
FIG. 39 is a sectional view of a modification of a power transmission gear in the shifter shaft shown in FIG. 32.
FIG. 40 is a sectional view showing an engaging position of a movable body in a differential mechanism of the power transmission mechanism in the axle shown in FIG. 1.
FIG. 41 is a sectional view showing a released position of the movable body in the differential mechanism shown in FIG. 40.
FIG. 42 is a side view of a secondary side transmission member in the differential mechanism shown in FIG. 40, and shows a moving state from the engaging position of the movable body to the released position of the movable body.
FIG. 43 is a sectional view showing a principal part of the secondary side transmission member in the differential mechanism shown in FIG. 40, and shows a moving state from a state in a sectional view along the line Z1 - Z1 in FIG. 42 to a state in a sectional view along the line Z2 - Z2 in FIG. 42.
FIG. 44, is a sectional view of a locking mechanism, at an unlocking time, provided on the power transmission mechanism shown in FIG. 40.
FIG. 45 is a sectional view of the locking mechanism in FIG. 44 at a locking time.
FIG. 46 is a sectional view of a locking mechanism indicated as an embodiment different from the locking mechanism shown in FIG. 44 at an unlocking time.
FIG. 47 is a sectional view of the locking mechanism shown in FIG. 46 at a locking time.
FIG. 48 is a side view showing an operation transmitting part for transmitting an operational input of a lock lever to an operational rod in the locking mechanism shown in FIG. 44.
FIG. 49 is a partial side view of a mounting part of the lock lever shown in FIG. 48 to a handle part.
FIG. 50 is a partial side view of the agricultural machine shown in FIG. 1 with a levelling rake.
FIG. 51 is a side view of a conventional agricultural machine.

### Description of the Preferred Embodiments

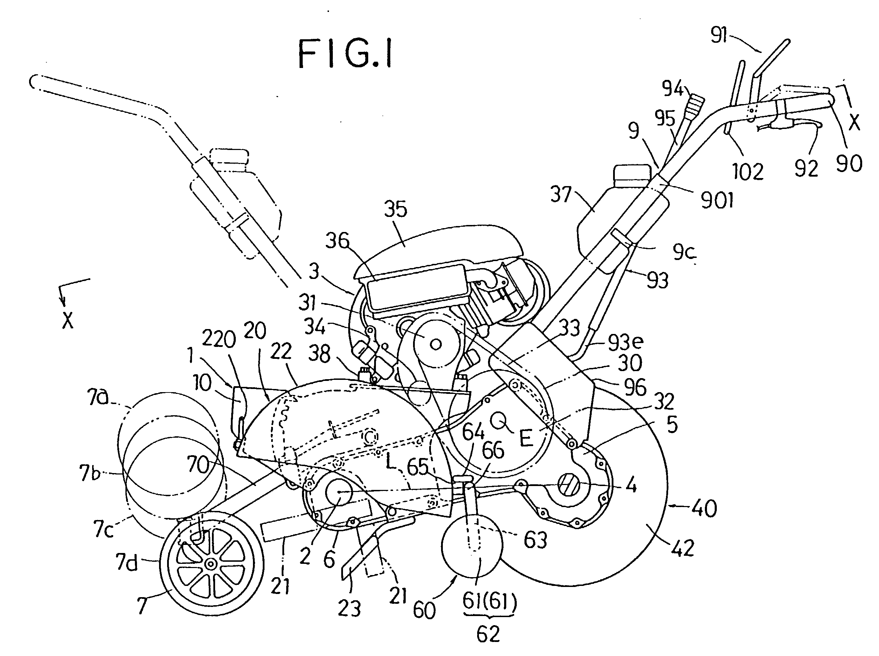

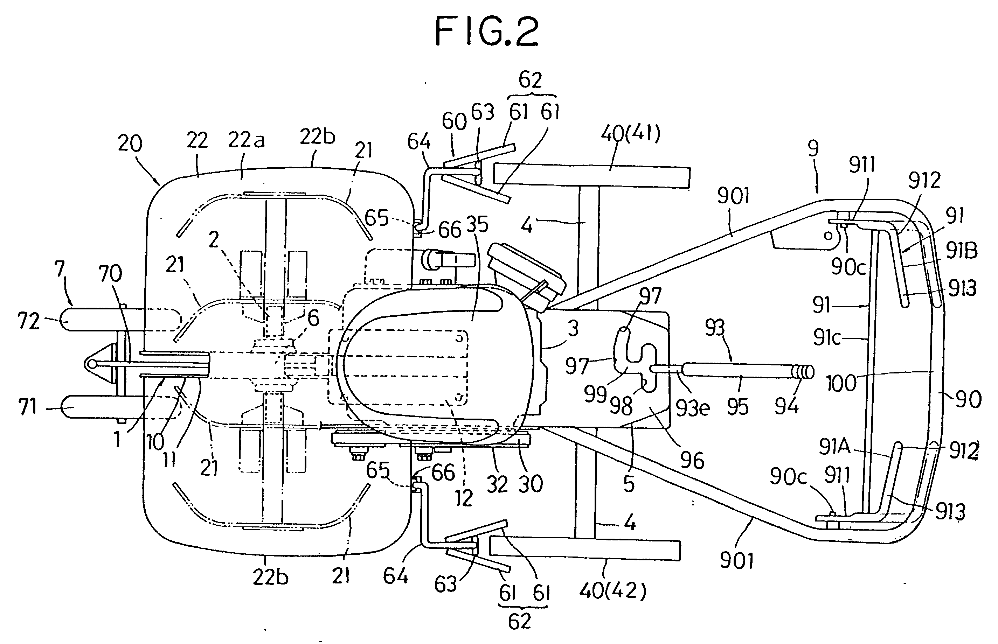

An agricultural machine shown in FIG. 1 and FIG. 2 is a walking type management machine, and a rotor shaft 2 for driving a rotary tiller 20, an engine 3 which is a driving source, and an axle 4 for driving traveling wheels 40 consisting of a pair of right and left wheels 41 and 42 are arranged along the front-rear horizontal direction of a machine body 1 from the front portion in relation appearing in this order.

Further, a handle 9 is provided with extension toward in the rear portion and the traveling wheels 40 are interposed between an operator grasping this handle 9 and the tiller 20, so that safety of the operator can be ensured. The handle 9 may be reversely equipped as shown by phantom lines, in place of being extended toward the rear portion.

The power of the engine 3 is transmitted to an input shaft E of a transmission case 5 through a pair of output/input pulleys 31 and 32 contained in a transmission case 30 and a belt 33 wound around them, for driving the right and left wheels 41 and 42 mounted on the axle 4.

Numeral 34 denotes a tension roller forming a clutch mechanism 49 to be described later, which is switched on/off by a clutch lever 91 supported by the handle 9. Numeral 35 denotes an engine cover, numeral 36 denotes a silencer, and numeral 37 denotes a fuel tank.

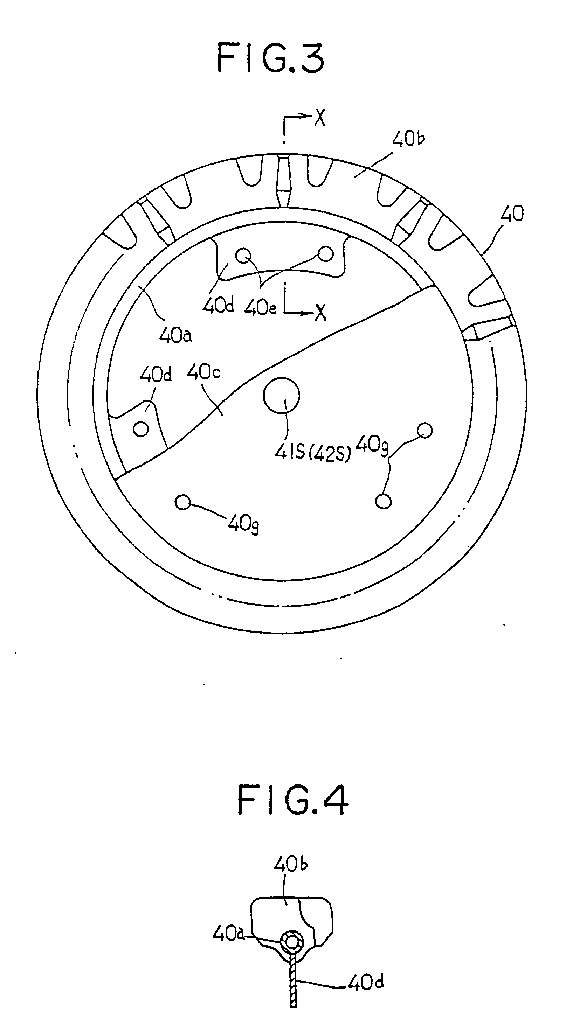

In the traveling wheel 40, a lag tire 40b having a ringshaped rim 40a therein and a spoke 40c coupling the rim 40a with the axle 4 are preferably formed separately, as shown in FIG. 3 and FIG. 4.

Namely, the spoke 40c is formed in a discoidal shape while a plurality of radially inwardly extending attachments 40d are integrally provided on the rim 40a, and a plurality of fixing bolts 40g are fastened through attachment holes 40e formed in the respective attachments 40d in a state applying the spoke 40c to outer side surface of the respective attachments 40d, thereby attaching the spoke 40c on the respective attachments 40d.

When the traveling wheel 40 is thus structured, even if the diameters or shapes of the axles 41S and 42S vary with the machine type or the like, it is possible to cope with the change by simply replacing the spoke 40c without replacing the lag tire 40b while employing the lag tire 40b in common for attaining cost reduction. Further, it is also possible to prevent the traveling wheel 40 from catching crops or raising up the soil by forming the spoke 40c in a discoidal shape.

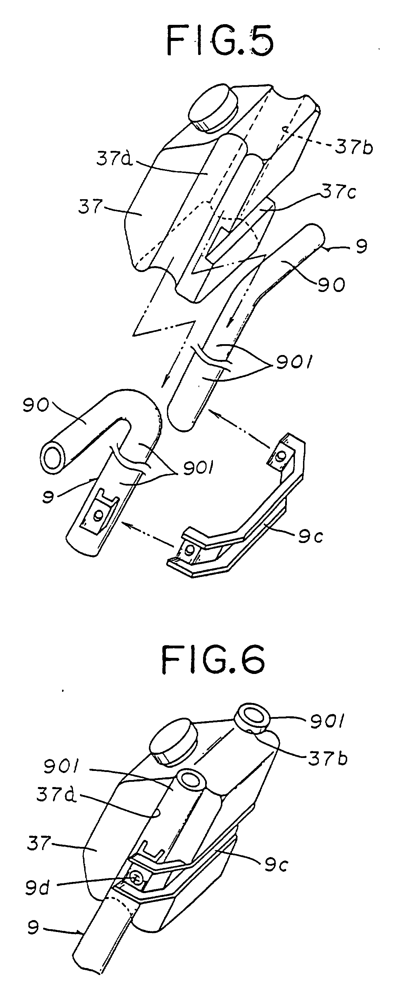

In the fuel tank 37, semicircular groove parts 37a and 37b along the shape of the handle 9 are provided on right and left sides, while a concave groove part 37c coupling the right and left with each other is provided on a rear bottom surface, as shown in FIG. 5 and FIG. 6.

The semicircular groove parts 37a and 37b are inserted in the handle 9 from a grip part 90 side toward right and left handle base parts 901 in the handle 9 thereby inhibiting right-left direction movement, while a band 9c made of a steel band or the like is fitted in the concave groove part 37c and attached on the right and left handle base parts 901 by screws 9d, thereby preventing movement in the front-rear direction.

Thus, the front-rear and left-right position of the fuel tank 37 are excellently kept and a support position of the fuel tank 37 is kept high with respect to the engine 3 for making a fuel supply pump unnecessary in a compact and simple structure, while the distance between the fuel tank 37 and the engine 3 is increased to prevent the fuel from unpreparedly splashing on the silencer 36 etc. in fuel supply.

As shown in FIG. 1, a rotary case 6 is provided for branching and taking out the power from the transmission case 5 to give it to the rotor shaft 2, the rotary case 6 including a line segment L connecting the axle 4 with the rotor shaft 2 in the outer contour thereof, and being arranged in substantially horizontal manner along the line segment L.

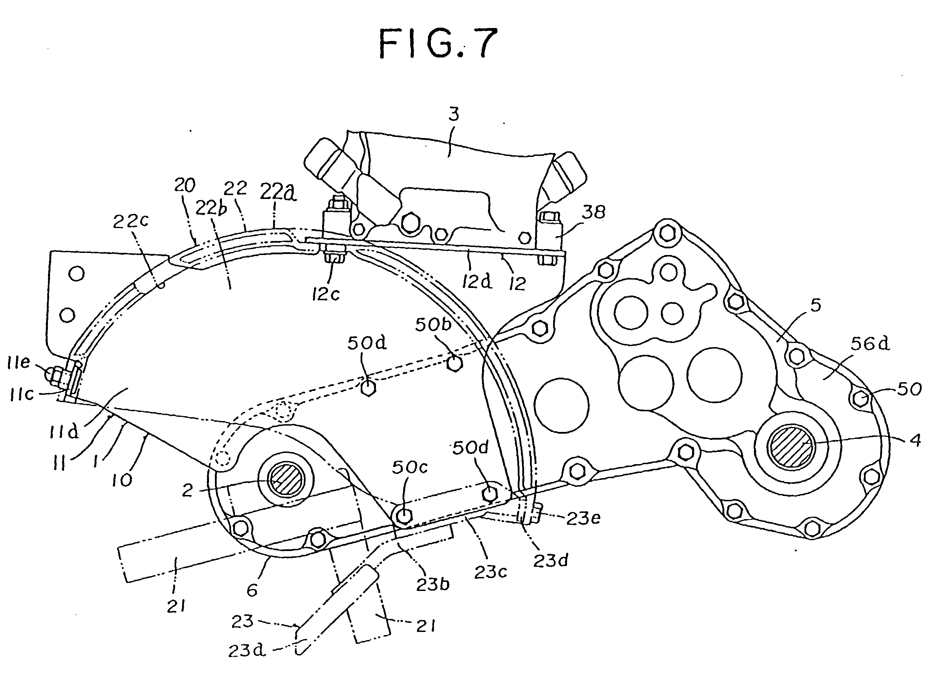

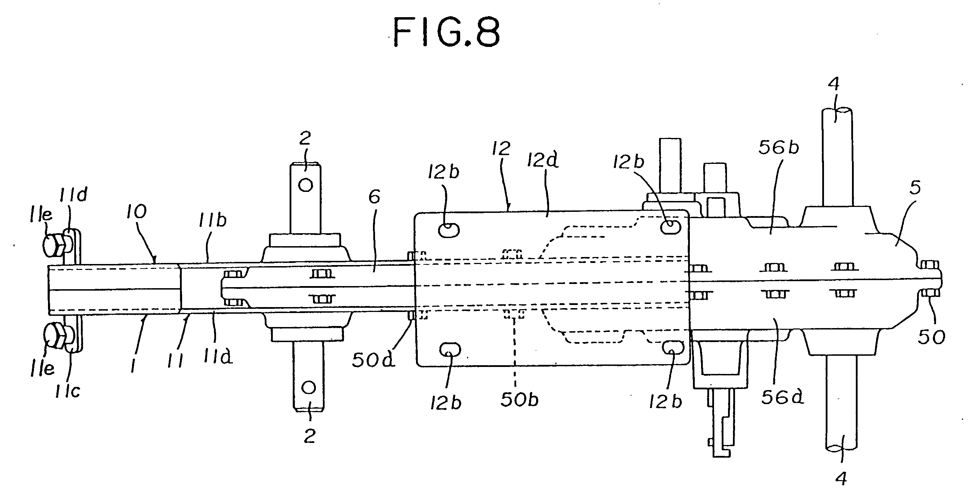

This rotary case 6 and the transmission case 5 are integrally formed by aluminum die-cast molding. More strictly, right and left split cases 56a and 56b integrally comprising parts of these two cases 5 and 6 are integrally formed by aluminum die-cast molding, and these split cases 56a and 56b are butted against each other to be coupled by a number of bolts 50, as shown in FIG. 7 and FIG. 8.

The rotary tiller 20 driven by the rotor shaft 2 comprises tillage tines 21 of four-row arrangement formed by hatchet tines, and a substantially semicylindrical rotary cover 22 covering outer portions of the tillage tines 21, and the rotary tiller 20 and the engine 3 are arranged so as to overlap with each other in plan view, as shown in FIG. 2.

A rotary frame 11 for fixing the rotary cover 22 as well as an engine frame 12 supporting the engine 3 are defined by a common frame 10 forming the machine body 1, as shown in FIG. 7 and FIG. 8.

The rotary frame 11 comprises right and left vertical plate members 11a and 11b holding the rotary case 6 from the left and the right, and these plate members 11a and 11b are fastened together by parts 50a, 50b, 50c and 50d of the bolts 50 coupling the right and left split cases 56a and 56b forming the rotary case 6.

Further, right and left fixtures 11c and 11d for fixing the front part of the rotary cover 22 with bolts 11e are provided on the front part of the respective plate members 11a and 11b.

The engine frame 12 consists of a horizontal plate member 12a which is integrally fixed to rear upper ends of the plate members 11a and 11b forming the rotary frame 11, and has a size corresponding to an engine base 38, and four slots 12b for installing engine are provided in the plate member 12a. The upper part of the rotary cover 22 is fastened to the front two slots 12b by the bolts 12c along with the engine 3, as shown in FIG. 7.

Thus, according to prior arts in general, since the engine frame and the rotary frame are mounted on the transmission case respectively, it is necessary to extremely strongly fix the mounting portions thereof. According to the present invention, on the other hand, since the respective single plates 11a and 11b of the frame 10 employed in common are coupled to the rotary case 6, rigidity can be sufficiently improved without extremely strong fixation.

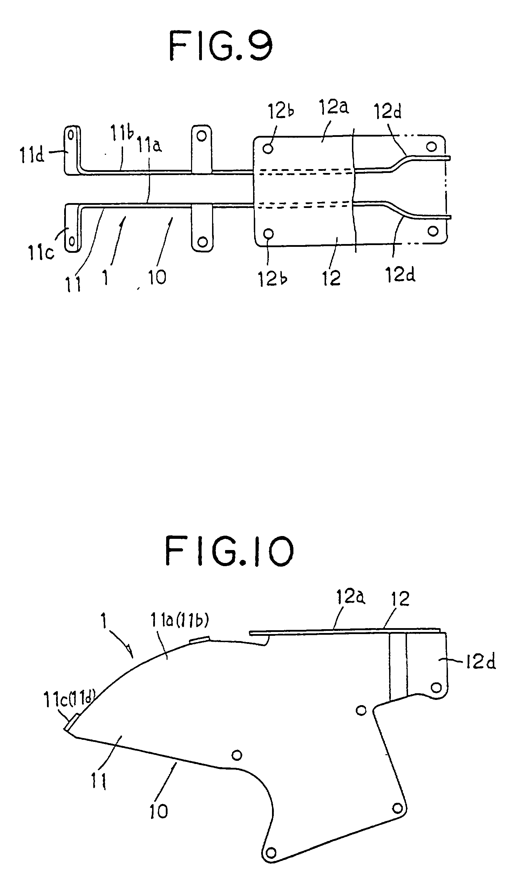

As shown in FIG. 9 and FIG. 10, bent step parts 12d which are outwardly bent rightward and leftward respectively may be integrally formed on the common frame 10, so that the side for mounting the transmission case 5 has a wide space on its rear part side. The bent step parts 12d makes it possible to improve the strength of the common frame 10 and to enhance vibration resistance, thereby improving stability at the time of carrying the engine 3.

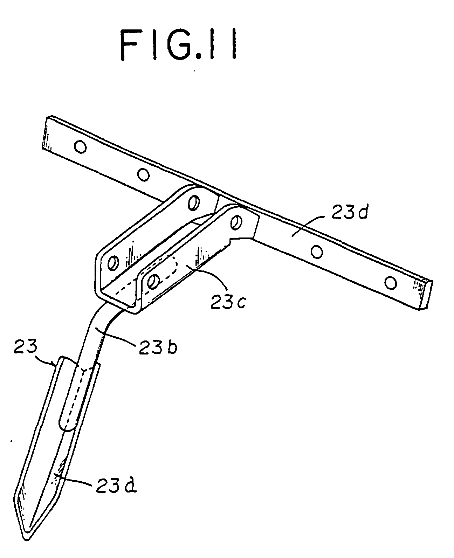

A residual disposer 23 is arranged under the rotary tiller 20, which consists of a V-shaped residual disposal body 23a digging into the soil, an upwardly opening U-shaped bracket 23c fixing the residual disposal body 23a through a connecting bar 23b, and a transverse stay 23d extending rightward and leftward at the rear portion thereof, as shown in FIG. 11.

As shown in FIG. 7, the U-shaped bracket 23c in the residual disposer 23 is held under the rotary case 6 to be fastened and fixed by the bolts 50c and 50d along with the respective plate members 11a and 11b, thereby preventing the lower part of the rotary case 6 from being damaged by stone jumping or the like. Further, the transverse stay 23d and the rear part of the rotary cover 22 are fixed by screws 23e, for improving support rigidity of the rotary cover 22.

The rotary cover 22 may be formed by blow molding with a synthetic resin material, wherein its semicylindrical cover body 22a and a pair of side covers 22b arranged on the right and left sides of the cover body 22a are integrally formed, and a cover inner surface 22c is shaped along a smooth circular arc so that flow of soil is improved as much as possible, in consideration of projections or the like of fixed parts by the bolts 11e and 12c and the screws 23e.

Namely, the blow molding increased the degree of freedom of shape formation, thereby making it possible to finish the inner surface 22c of the rotary cover 22 in a shape different from the outer surface. The outer surface is brought into a shape considering coupling with the frame 10 and the design in appearance while the inner surface 22c is finished in a smooth shape capable of preventing adhesion of soil or the like, so that the tilling operation can be well performed.

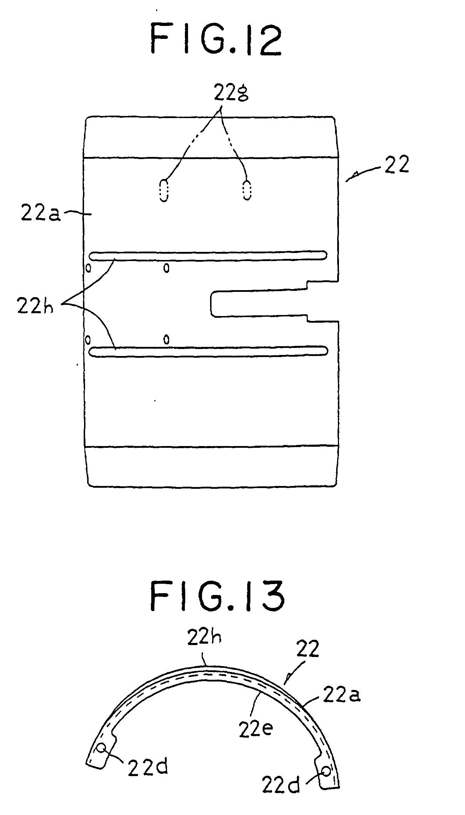

The cover body 22a and the side cover 22b may be divided, and the side cover 22b may be detachably mounted on the cover body 22a. Namely, the whole of the cover body 22a is brought into a semicylindrical shape having bend on the upper side toward the front-rear direction, and a plurality of reinforcing ribs 22h extending in the front-rear direction are integrally formed on the upper surface while an attachment 22e having a plurality of through holes 22d is integrally provided on right and left end sides of the cover body 22a, as shown in FIG. 12 and FIG. 13.

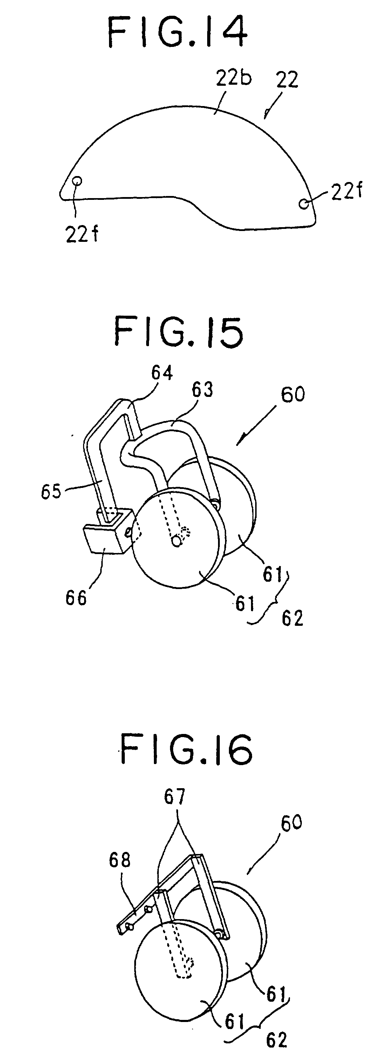

Further, the side cover 22b is formed by a semicircular plate having a plurality of through holes 22f corresponding to the through holes 22d of the cover body 22a as shown in FIG. 14, and fixing bolts are inserted between these respective through holes 22d and 22f and fixed with nuts, thereby detachably mounting the side cover 22b to the cover body 22a.

When the machine is brought into the aforementioned structure, another attachment such as a spiral rotor can be easily mounted by removing the side cover 22b from the cover body 22a in case of replacing the tillage tines 21 provided in the rotary cover 22 with the spiral rotor, for example, while cleaning in the rotary cover 22 and a maintenance operation can also be readily performed.

Also in case of newly mounting an attachment longer than the rotary cover 22, the long attachment can be readily mounted by removing the side cover 22b from the cover body 22a and mounting another long side cover 22b having a semicircular supplementary body part continuing to the right and left ends of the cover body 22a and a side part extending downward from an end of the supplementary body part, making it possible to prevent the operator from being struck by the soil or stones with the long side cover 22b.

Referring to FIG. 12, a plurality of mounting holes 22g are formed in the cover body 22a, so that another cover can be mounted on the mounting holes 22g.

A ridge plower 60 may be arranged between the rotary tiller 20 and the traveling wheel 40. As obvious from FIG. 15, the ridge plower 60 comprises a disk type ridge plowing body 62 consisting of a pair of right and left disk plates 61, a support rod 63 which supports the respective disk plates 61 allowing free rotation in such inclined states that the front side has a narrow space and the rear side has a wide space and which is formed in a substantially U-shape with an upper part bent, a bent rod 64 extending upward from the upper side of the support rod 63 to be bent toward the rotary cover 22 side of the rotary tiller 20 from its upper end, and a attaching rod 65 extending downward from the bent rod 64, wherein the attaching rod 65 is attached to an attaching bracket 66 provided on a cross-directional outer side end on the back surface of the rotary cover 22.

As shown in the embodiment of FIG. 1 and FIG. 2, two pairs of such ridge plowing devices 60 may be arranged on a front side in an advance direction of the right and left wheels 41 and 42, so that, to describe in detail, the rear side of the respective disk plates 61 in the ridge plowing body 62 may cover the sides of the front portions of the wheels 41 and 42.

In the tilling operation, the operator vertically adjusts the height of the handle 9 thereby inclining the machine body 1 in the vertical direction about the traveling wheel 40 for adjusting height with respect to the soil, of the rotary tiller 20 arranged on the front side of the traveling wheel 40, namely, for performing the tilling operation with a prescribed depth of the soil with the tillage tines 21 while adjusting the digging depth into the soil by the tillage tines 21 provided on the rotary tiller 20.

In such a tilling operation, each ridge plowing body 62 is arranged between the rotary tiller 20 and the traveling wheel 40, the ridge plowing body 62 is not obstructive at the time of adjusting the digging depth of the rotary tiller 20 but a tilling operation of a prescribed depth can be performed with the rotary tiller 20 while a ridge plowing operation by each ridge plowing body 62 can be efficiently performed simultaneously with this tilling operation.

In case of employing the aforementioned disk type ridge plowing body 62 as the ridge plower 60, the disk plates 61 thereof have small contact resistance with the soil and are excellent in digging into the soil, whereby it is possible to reliably perform ridge plowing by pushing the soil tilled by the rotary tiller 20 to both sides with the respective disk plates 61 rotating as the machine body travels.

Further, the disk plates 61 rotate in machine body traveling, whereby tractive resistance can be reduced even when two pairs are provided as described above, while an excellent ridge plowing operation can be performed without dragging weeds or the like.

In addition, the disk type ridge plowing body 62 is so compact to be readily arranged between the rotary tiller 20 and the traveling wheel 40.

Further, it is possible to beautifully and excellently form ridge grooves while preventing the traveling wheel 40 from treading the cultivated soil tilled by the rotary tiller 20 hard and rutting the grooves between ridges, because the respective disk plates 61 of the ridge plowing body 62 is so arranged that the rear side thereof covers the sides of the front portions of the traveling wheel 40.

Further, it is also possible to reliably ensure safety of the operator by arranging the traveling wheel 40 on the handle 9 side to be operated by the operator and arranging the rotary tiller 20 on the front side of the traveling wheel 40, as described above.

As shown in FIG. 16, the ridge plower 60 may be formed by a disk type ridge plowing body 62 consisting of a pair of right and left disk plates 61, a pair of support rods 67 supporting the pair of disk plates 61 allowing free rotation and an attaching rod 68 which is extended between the support rods 67 and has an extended part on the rotary cover 22 side, wherein the ridge plower 60 is mounted on the rotary cover 22 by directly bolting the extended part of the attaching rod 68 on the back surface of the rotary cover 22.

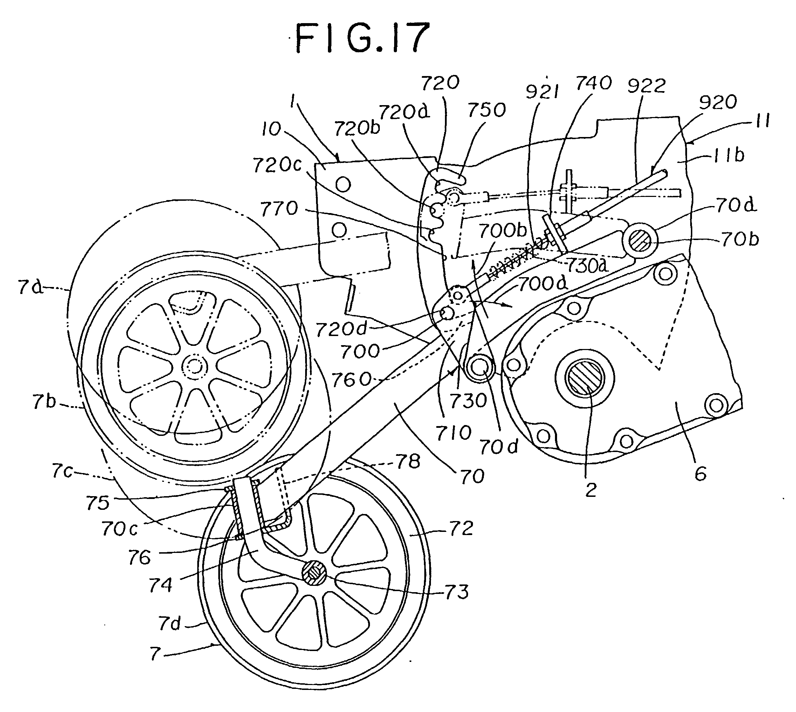

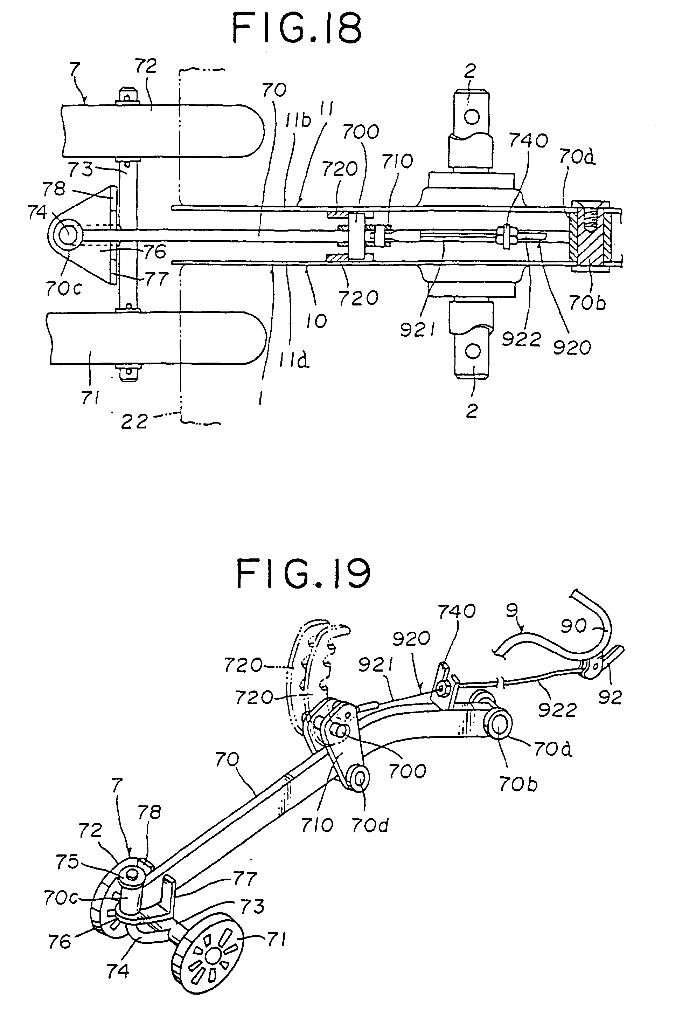

On the front part of the machine body, as shown in FIG. 17, FIG. 18 and FIG. 19, provided is an elevational wheel 7 whose support height with respect to the machine body 1 is changeable between three types of working heights including a height 7a corresponding to deep tillage, a height 7b corresponding to standard tillage and a height 7c corresponding to shallow tillage, and a non-working height 7d for moving the machine body 1 on a ground not to be tilled, other than the cultivated soil or the like.

This elevational wheel 7 has a pair of right and left small wheels 71 connected with each other by a connecting pipe 73, and they are supported through a swing arm 70 on the inner part of the rotary cover 22 to be swingable with respect to the frame 10 forming the machine body 1.

The swing arm 70 is interposed between the right and left plate members 11a and 11b forming the frame 10 and swingably supported with its base end cylindrical part 70a on the respective plate members 11a and 11b through a pivotal pin 70b, while a pivot 74 extending upward from the connecting pipe 73 is inserted in its top end cylindrical part 70c so that the same is engaged by upper and lower engaging bodies 75 and 76. Numerals 77 and 78 denote regulators for regulating right and left turning angles, which are integrally provided on the lower stop body 76.

Further, on the inner surfaces of the plate members 11a and 11b, fixed are a pair of lock plates 720 which are provided with deep tillage corresponding grooves 720a, standard tillage corresponding grooves 720b, shallow tillage corresponding grooves 720c and non-working corresponding grooves 720d in the vertical direction respectively.

Arm locks 710 having lock pins 700 are swingably supported on the swing arm 70 through pivotal pins 70d, and the arm locks 710 are coupled to an inner 921 of an operation wire 920 operated by an operating lever 92 supported on the handle 9. The swing angle of the swing arm 70 is changed by engaging both ends of the lock pins 700 with any of the deep tillage corresponding grooves 720a, the standard tillage corresponding grooves 720b, the shallow tillage corresponding grooves 720c and the non-working corresponding grooves 720d provided in the lock plates 720 with operating to swing the arm locks 710 by a lever operation, whereby the support height of the elevational wheel 7 is changed.

Numeral 730 denotes forcing bodies such as coil springs for forcing the arm locks 710 to the sides of the lock plates 720, which are wound on the pivotal pins 70d so that one ends are hung on the swing arm 70 and the other ends are brought into pressure contact with the upper back surfaces of the arm locks 710, thereby forcing the arm locks 710 toward the lock plates 720 sides.

Numeral 740 denotes a holder for holding an outer 922 of the operation wire 920, which is mounted on the swing arm 70.

The forcing bodies 730 may be interposed between the holder 740 and the top end of the inner 921 (phantom line 730a), in place of being positioned at the pivotal pins 70d.

Numerals 750 and 760 denote stoppers for inhibiting the lock pins 700 from falling from an arcuate movement range between the uppermost grooves 720a and the lowermost grooves 720d of the lock plates 720.

Further, surfaces 770 on which the respective grooves 720a to 720d are formed in the lock plates 720 are formed to include single circular arcs drawn about the position of the pivotal pin 70b pivotally supporting the swing arm 70, so that the lock pins 700 are not unpreparedly separated from the respective grooves 720a .. unless a lever operation is made, along with that a separation direction 700a of the lock pins 700 with respect to the respective grooves 720a .. and a vertical movement direction 700b of the lock pins 700 with respect to the lock plates 720 are made substantially perpendicular. The respective grooves 720a .. are also arranged to be positioned on a specific circular arcs drawn about the pivotal pin 70b.

Thus, the support position of the elevational wheel 7 can be selected from three types corresponding to tilled depths by operating the operating lever 92. This makes it possible to properly prevent the rotary tiller 20 from sinking down while receiving reactive force of the tillage tines 21 is received and force pressing the rear traveling wheel 40 against the ground surface is generated, thereby further preventing dashing from occurring.

Further, a series of operations of the operating lever 92 can change from the working height to a movement height in non-working, and when the height is changed from any position to another, the stroke of the operation wire 920 remains unchanged and its operational load can be substantially uniformalized, since the holder 740 for the outer is mounted on the swing arm 70, the arm locks 710 are pivotally supported on the swing arm 70, and the respective grooves 720a to 720d are arranged to be positioned on the circular arcs drawn about the pivotal pin 70b.

In addition, the swing arm 70 is arranged between the pair of plate members 11a and 11b forming the frame 10, whereby it is possible to prevent an elevational movement of the elevational wheel 7 from being inhibited by adhesion of soil, soil biting or the like, while the number of members projecting to the exterior of the rotary cover 22 in supporting of the elevational wheel 7 is small and troubles resulting from adhesion of soil can also be reduced as a whole.

At the working height of the elevational wheel 7, further, the distance between a touchdown point of the elevational wheel 7 and a touchdown point of the traveling wheel 40, i.e., a front-rear wheel base can be lengthened so that a stable operation can be performed, while the wheel base can be shortened in the non-working movement height to also attain such advantages that the movement and turn are easily performed.

Further, the elevational wheel 7 is arranged in front of the rotary tiller 20, whereby this elevational wheel 7 fills the role of a bumper, and it is possible to prevent the tiller 20 from damaging a green house in an operation in the green house or the like.

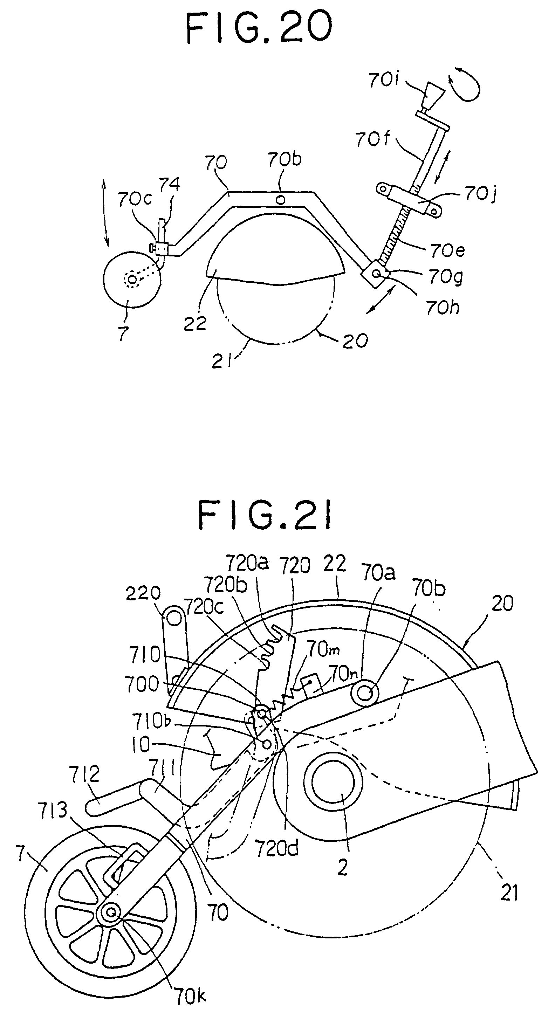

In order to support the elevational wheel 7 with free swing, a swing arm 70 which is brought into a shape along the outline of the rotary cover 22 may be supported allowing free swing on the plate members 11a and 11b through a pivotal pin 70b above the cover 22, and its base end is coupled to an operating tool 70g provided on an end portion of an operating rod 70f having a screw 70e by a pin 70h in a state allowing slight play, for steplessly adjusting the elevational wheel 7 by advance/retraction of the operating rod 70f with respect to a fixed body 70j by a turning operation of a handle 70i, as shown in FIG. 20.

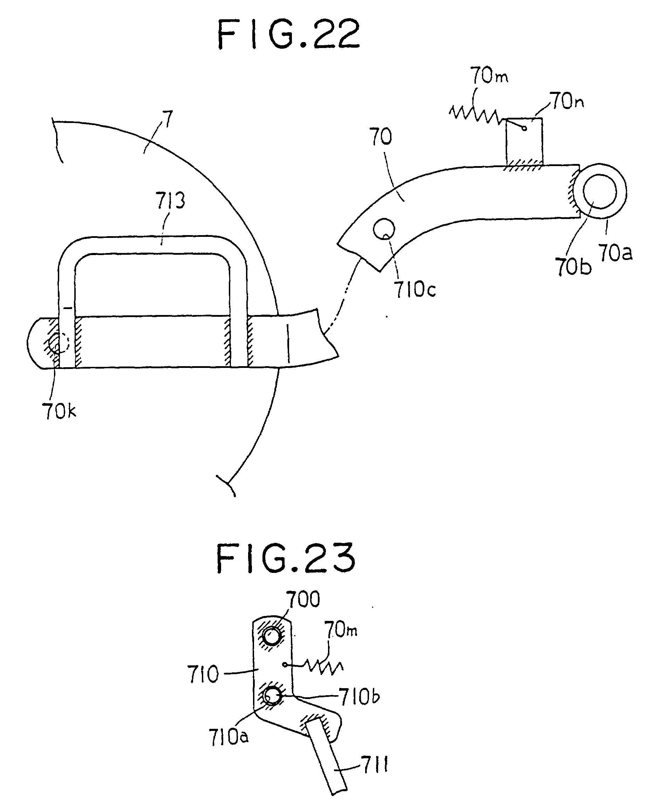

Alternatively, the elevational wheel 7 may be held allowing free rotation on the top end of the swing arm 70 through a rotary shaft 70k as shown in FIG. 21, and the base end cylindrical portion 70a of the swing arm 70 is supported by the frame 10 through a pivotal pin 70b, for moving the elevational wheel 7 to vertical respective positions by a vertical swing operation of the swing arm 70.

Since the elevational wheel 7 shown in FIG. 17 to FIG. 19 comprises the aforementioned caster mechanism and is supported allowing free rotation through the caster mechanism, the straight traveling property of the machine body 1 may be deteriorated for such a reason that the elevational wheel 7 presses the soil forward in traveling in a field if the machine comprises such a caster mechanism. On the other hand, it is possible to ensure an excellent straight traveling property in the field when a single elevational wheel 7 is supported on a top end of the swing arm 70 through the rotary shaft 70k as shown in FIG. 21.

Further, a grasp part 713 to be grasped by the operator in vertical adjustment of the elevational wheel 7 which will be described later in detail is attached in the vicinity of the rotary shaft 70k on the swing arm 70 as shown in FIG. 21 and FIG. 22, while a pin hole 710c for pivotally supporting the arm locks 710 is provided in a longitudinal intermediate portion of the swing arm 70 and a spring holder 70n for holding a forcing spring 70m is mounted on a base portion of the swing arm 70.

Further, the pair of right and left lock plates 720 are mounted on the frame 10, which is provided with the deep tillage corresponding grooves 720a, the standard tillage corresponding grooves 720b, the shallow tillage corresponding grooves 720c and the non-working corresponding grooves 720d.

Further, the pair of right and left arm locks 710 which are brought substantially into the form of cranks are arranged in the vicinity of the lock plates 720 as obvious from FIG. 21 and FIG. 23. The arm locks 710 has pin holes 710a formed in central portions thereof so that pivotal pins 710b are inserted between the pin holes 710a and the pin hole 710c of the swing arm 70, thereby being supported to be swingable frontward and rearward about the pivotal pins 710b with respect to the swing arm 70.

In addition, the lock pins 700 selectively engaged in the respective grooves 720a to 720d of the lock plates 720 are projectingly provided on the top ends of the right and left arm locks 710, while a single adjusting lever 711 extending toward the elevational wheel 7 side is coupled and integrated with the other end of the each arm lock 710, so that an operating part 712 to be grasped by the operator in vertical adjustment of the elevational wheel 7 is mounted on a forward end of this lever 711. The forcing spring 70m is extended between the arm locks 710 and the spring holder 70n of the swing arm 70, for reliably engaging and holding the lock pins 700 in the respective grooves 720a to 720d with urging force of this spring 70m.

When the elevational wheel 7 is vertically adjusted in case of performing tilling depth adjustment by the rotary tiller 20, the operator simultaneously grasps the grasp part 713 of the swing arm 70 and the operating part 712 of the adjusting lever 711 provided on the arm locks 710 with a single hand.

Then, it comes to that the arm locks 710 are swung frontward counterclockwise through the adjusting lever 711 about the pivotal pins 710b against the urging force of the forcing spring 70m as shown by phantom lines in FIG. 21 and the lock pins 700 engaged with any ones of the respective grooves 720a to 720d provided in the lock plates 720 separate from the engaging grooves, whereby the elevational wheel 7 can be vertically moved by moving the swing arm 70 about the pivotal pins 710b in the vertical direction in a state of grasping the grasp part 712 and the operating part 713 with a single hand.

When the elevational wheel 7 is positioned at a predetermined height, in case that the lock pins 700 are opposed to predetermined grooves 720a to 720d and the hand is separated from the grasp part 712 and the operating part 713, the lock pins 700 are engaged with any ones of the respective grooves 720a to 720d by the forcing spring 70m, and hence the tilling depth by the rotary tiller 20 can be simply and reliably adjusted in a desired depth.

Further, the operator can correctly confirm the tilling depth adjusted position by performing the tilling depth adjustment of the rotary tiller 20 in the vicinity of the rotary tiller 20.

In the embodiment shown in FIG. 1, further, a grip 220 is mounted on the front part of the rotary cover 22 for vertically moving the whole of the rotary tiller 20 by grasping the grip 220.

In this case, an exchange of the tillage tines 21 and a cleaning thereof can be readily performed by raising the rotary tiller 20 upward while grasping the grip 220 in case of replacing the tillage tines 21 or removing soil or grass entwined with the tillage tines 21, for example.

Further, while movement of the elevational wheel 7 to a position lower than the rotary tiller 20, for example cannot be made in a state of keeping the rotary tiller 20 grounded at the time of moving the elevational wheel 7, the elevational wheel 7 can be readily moved to a position lower than the rotary tiller 20 by moving the elevational wheel 7 downward in a state of raising the whole of the rotary tiller 20 upward by grasping the grip 220.

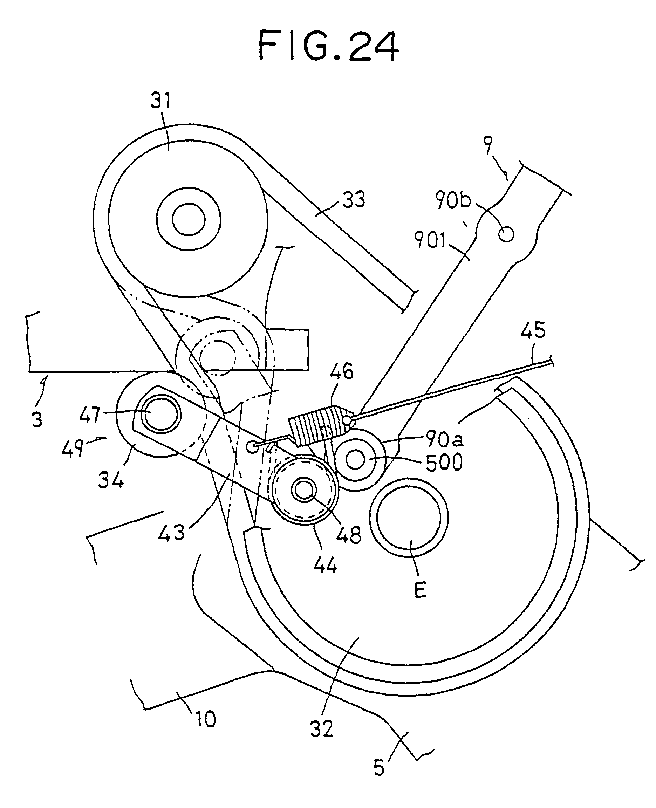

In addition, as obvious from FIG. 24, the clutch mechanism 49 comprises a swing arm 43 rotatably supporting a tension roller 34 through a rotary shaft 47 on a top end thereof while being supported a base part on the transmission case 5 allowing to swing backward and forward through a pivotal pin 48, a first spring 44 consisting of a torque spring wound on the outer periphery of the pivotal pin 48 on the base part of the swing arm 43, and an operation wire 45 having a longitudinal end coupled to the swing arm 43 and the other end coupled to a clutch lever 91 to be described later.

A one leg of the first spring 44 is engaged with the swing arm 43 and the other leg thereof is engaged with a handle mounting boss part 500 provided on the transmission case 5 as described later, so that the swing arm 43 is forced to always swing forward by the first spring 44, and following this, the tension roller 34 is moved in a direction for loosening the belt 33 and held in an unclutched state.

A second spring 46 of a conical shape is mounted on the top end of the operation wire 45 for coupling the operation wire 45 to the swing arm 43 therethrough, whereby the clutch lever 91 is turned from a clutched state to an unclutched state by these first and second springs 44 and 46.

The handle 9 is formed substantially in a U-shape, by the pair of right and left handle base parts 901 whose forward base parts are coupled to and supported by the transmission case 5 and the loop-shaped grip part 90 continuously coupled to rear free ends of the respective handle base parts 901, as shown in FIG. 1.

In this embodiment, a cylindrical body 90a is provided on the front end of each handle base part 901 as shown in FIG. 24, so that this cylindrical body 90a is inserted in and coupled to the handle mounting boss part 500 provided on the transmission case 5 while a single positioning hole is provided in a longitudinal intermediate portion of each handle base part 901.

A plurality of pins 90b inserted in this positioning hole are provided on the transmission case 5 on a circular arc about the boss part 500 so that the positioning hole is engaged with any one of the plurality of pins 90b, thereby each handle base part 901 is supported to be angle-changeable about the boss part 500.

Further, as shown in FIG. 1, the clutch lever 91 for on-off operating the clutch mechanism 49 is supported to swing backward and forward in the vicinity of the grip part 90 in the handle base parts 901.

This clutch lever 91 comprises right and left support parts 911 which are supported allowing free swing on the respective handle base parts 901 through pivotal pins 90c, and operating parts 912 which are coupled to free ends of the respective support parts 911 to extend in parallel with the grip part 90 of the handle 9, and a grasp part 913 to be grasped by the operator in a clutch operation is formed on the operating parts 912.

The clutch lever 91 swings the swing arm 43 of the clutch mechanism 49 frontward by urging force of the first spring 44 when the same is positioned to be substantially upright with respect to the grip part 90 of the handle 9 as shown in solid lines of FIG. 1 and FIG. 2, and following this, the tension roller 34 held on the swing arm 43 is moved in the direction for loosening the belt 33 as shown by solid lines in FIG. 24, for attaining an unclutched state.

When the clutch lever 91 is positioned to be inclined rearward overlapping with the grip part 90 of the handle 9 as shown by phantom lines in FIG. 1 and FIG. 2, on the other hand, it swings the swing arm 43 rearward through the operation wire 45 against the urging force of the first spring 44 and following this, the tension roller 34 is brought into pressure contact with the belt 33 side and strains the same as shown by phantom lines in FIG. 24, whereby a clutched state is held.

In the aforementioned structure, a non-overlapping part 100 not mutually overlapping is formed on at least one of the grip part 90 of the handle 9 and the operating parts 912 of the clutch lever 91. Namely, lengths of the operating parts 912 in the clutch lever 91 are shortened and the non-overlapping part 100 where the operating parts 912 do not overlap with the grip part 90 of the handle 9 is formed on a longitudinal intermediate portion of the grip part 90 of the handle 9 in the embodiment of FIG. 1 and FIG. 2.

In more detail, the clutch lever 91 is formed by a pair of independent first and second lever bodies 91A and 91B formed in substantial L-shapes on right and left having the support parts 911 and the operating parts 912 and a single connecting rod 91C which is extended between the support parts 911 of the lever bodies 91A and 91B, and the respective support parts 911 of the lever bodies 91A and 91B are supported by the respective handle base parts 901 through pivotal pins 90C, whereby the non-overlapping part 100 not overlapping with the operating parts of the respective lever bodies 91A and 91B is formed on the grip part 90 of the handle 9.

At the time of performing a tilling operation, for example, the operator grasps the non-overlapping part 100 of the grip part 90 of the handle 9 with one hand while grasping with the other hand either one of the grip parts 913 provided on the operating parts 912 of the first and second lever bodies 91A and 91B for operating to swing the same rearward, thereby simultaneously swinging the other one of the lever bodies 91A and 91B through the connecting rod 91C, and following this, the clutch mechanism 49 can be operated into the aforementioned clutched state through the operation wire 45 coupled to one of the lever bodies 91A and 91B.

Further, when the hand grasping the grasp part 913 is released from the above state, i.e., the state where the first and second lever bodies 91A and 91B are operated to swing rearward, the first and second lever bodies 91A and 91B are made upright again by the urging force of the first and second springs 44 and 46, whereby the clutch mechanism 49 returns from the clutched state to the unclutched state.

At this time, the non-overlapping part 100 where the operating part 912 does not overlap with the grip part 90 of the handle 9 is formed on the longitudinal intermediate portion of the grip part 90 of the handle 9, whereby it is possible to reliably operate to swing the respective lever bodies 91A and 91B from unclutched states of being held substantially upright with respect to the grip part 90 to clutched states of being inclined rearward mutually overlapping with respect to the grip part 90 with the grasp parts 913 of the lever bodies 91A and 91B and the grip part 90 of the handle 9 not overlapping with each other and with no hindrance by the hand grasping the grip part 90 by operating to swing one of the lever bodies 91A and 91B while grasping the non-overlapping part 100 of the grip part 90.

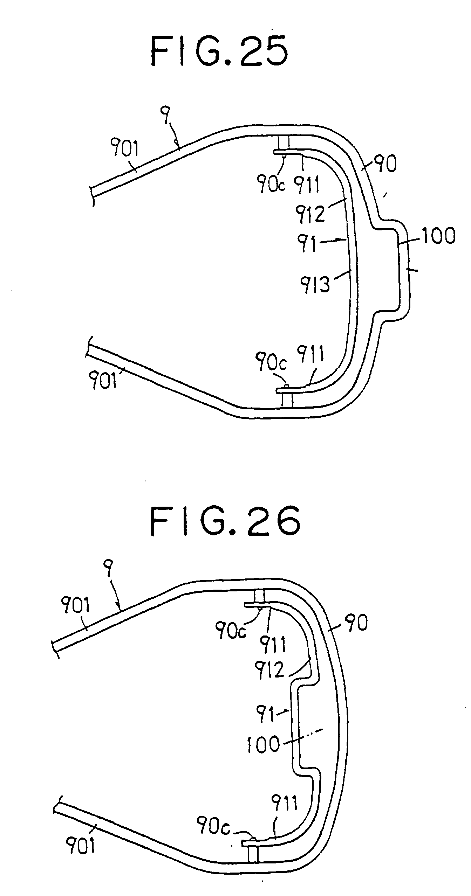

In an embodiment of FIG. 25, the clutch lever 91 is formed in a loop shape comprising right and left support parts 911 and an operating part 912 coupled to the free ends of these respective support parts 911 to extend in parallel with the grip part 90 of the handle 9 while the longitudinal central portion of the grip part 90 provided on the handle 9 is bent rearward in a U-shape in plan view, for forming the non-overlapping part 100 not overlapping with the operating part 912 of the clutch lever 91 by this bent part 902.

In an embodiment shown in FIG. 26, the grip part 913 in the operating part 912 is continuously formed while its longitudinal central portion is separately extended frontward in a U-shape in plan view with respect to the grip part 90 of the handle 9, thereby forming on the grip part 90 the non-overlapping part 100 not overlapping with the portion of the grip part 913 extending frontward.

Also in each of the aforementioned embodiments, it is possible to reliably operate to swing the clutch lever 91 from the unclutched state to the clutched state with no hindrance by the hand grasping the grip part 90 by grasping the non-overlapping part 100 of the grip part 90 of the handle 9 and performing a swing operation while grasping the grip part 913 of the operating part 912 provided in the clutch lever 91.

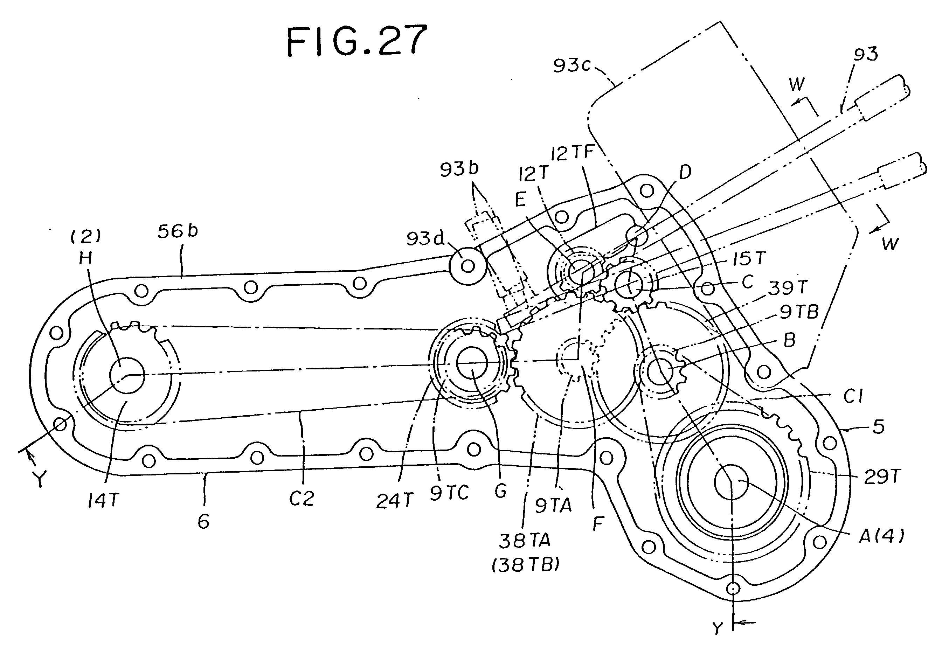

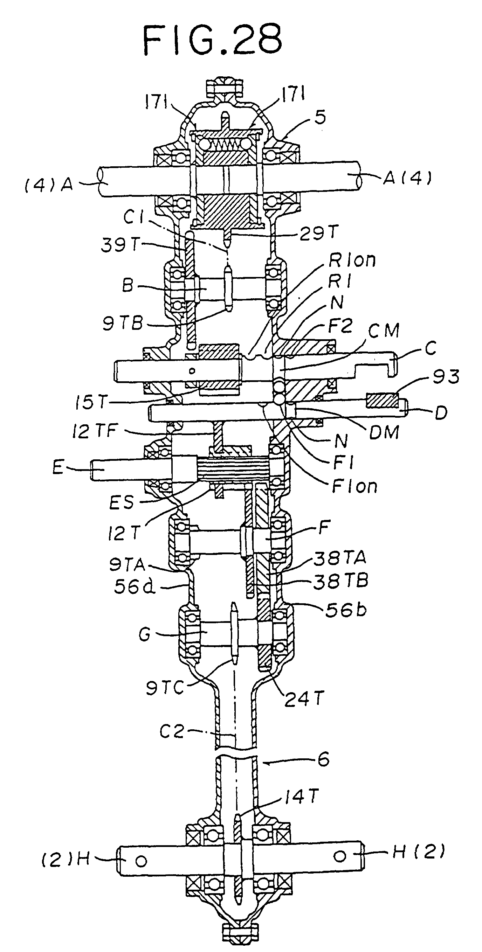

As shown FIG. 27 and FIG. 28, the transmission case 5 and the rotary case 6 forming a power transmission part comprises right and left output shafts A forming the axle 4, a traveling side intermediate shaft B interlocking with the same through sprockets 29T and 9TB and a chain C1 and having a gear 39T, a first shifter shaft C which is axially displaced in association with an operation of a shift lever 93 and has a power transmission gear 15T to be axially displaced following this axial displacement, a second shifter shaft D having a shift fork 12TF which is axially displaced in association with the operation of the shift lever 93, an input shaft E from the engine 3, supporting a gear 12T to be axially displaced by the shift fork 12TF through a spline part ES, an intermediate shaft F having a fixed gear 38TB for transmitting traveling power and a slipping gear 38TA for transmitting rotary power, a rotary side intermediate shaft G having a gear 24T, and an output shaft H which is the rotor shaft 2 interlocking with the same through sprockets 9TC and 14T and a chain C2.

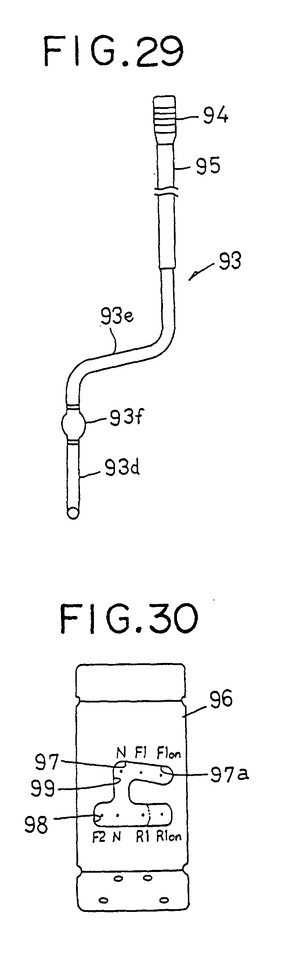

The shift lever 93 is formed by an operation rod 93d for operating a speed change mechanism, a guide rod 93e bent in the form of a crank to be inserted in a guide plate 96 as described later, a discoidal connecting plate 93f integrally connecting these respective rods 93d and 93e with each other, and an operating rod 95 having an operating part 94 coupled to a free end of the guide rod 93e, as obvious from FIG. 29.

The shift lever 93 is supported by the transmission case 5, in the manner that the operating rod 95 is extended to be inclined rear-upward through the guide rod 93e, as shown in FIG. 1 and FIG. 2. In this case, the operating part 94 of the operating rod 95 is positioned close to the grip part 90 of the handle 9, whereby the operator who operates the machine body 1 by gripping this grip part 90 can readily perform a speed change operation attaining excellent operability.

Further, the guide plate 96 in which the guide rod 93e of the shift lever 93 is inserted is arranged to incline oblique-downward toward the rear portion on a back upper portion of the transmission case 5 as shown in FIG. 1 and FIG. 2, and the guide plate 96 comprises first and second guide grooves 97 and 98 of vertical two stages and a communication groove 99 for making these respective guide grooves 97 and 98 communicate with each other, as shown in FIG. 30.

The shift lever 93 swings about a base shaft part 93a while rotating about a perpendicular shaft part 93b perpendicular thereto as shown in FIG. 27, and moves along the respective guide grooves 97 and 98 of the guide plate 96, as shown in FIG. 28 and FIG. 30.

When the first shifter shaft C is in a position of neutral N, the second shifter shaft D is selectively moved to respective positions of the neutral N, rotary-off advance low speed F1 not rotating the rotor shaft 2, and rotary-on advance low speed Flon rotating the rotor shaft 2.

When the second shifter shaft D is in the position of neutral N, on the other hand, the first shifter shaft C is selectively moved to respective positions of the neutral N, rotary-off reverse travel low speed R1 not rotating the rotary shaft 2, rotary-on reverse travel low speed Rlon rotating the rotary shaft 2, and rotary-off advance high speed F2 not rotating the rotor shaft 2.

Further a portion 97a of the advance low speed Flon position in the first guide groove 97 is inclined oblique-downward. In this case, it is possible to smoothly guide the shift lever 93 to the working position part 97a of the first guide groove 97 although the guide rod 93e in the intermediate portion of the shift lever 93 is bent upward in the form of a crank, while it is also possible to prevent the shift lever 93 from unintentionally moving when the shift lever 93 is positioned in the working position part 97a.

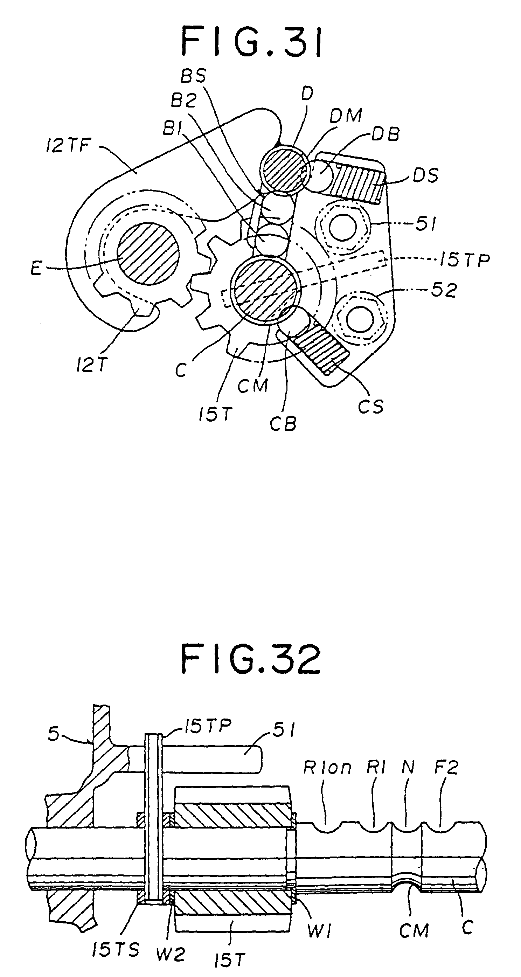

Positioning grooves CM and DM corresponding to respective shift stages are provided in the respective shifter shafts C and D as shown in FIG. 28, with which balls CB and DB pressed by coil springs CS and DS are engaged respectively as clearly shown in FIG. 31. Further, interposed between the shifter shafts C and D is a regulator BS consisting of two regulating balls B1 and B2 for projecting the regulating ball B2 or B1 facing the shifter shaft D or C not moved into the groove DM or CM in the neutral N position at a time of moving one shifter shaft C or D and holding the shifter shaft D or C not moved in the neutral N position.

The power transmission gear 15T supported on the first shifter shaft C forms a power transmission gear which is axially displaced following axial displacement of the first shifter shaft C for changing a transmission path for power taken out to the output side in response to the displaced position.

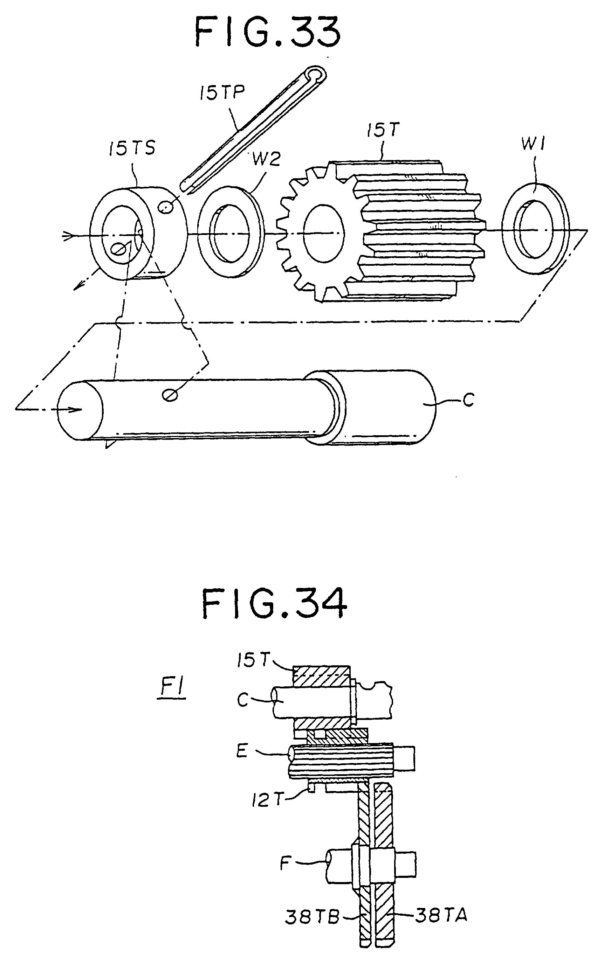

As shown in FIG. 32 and FIG. 33, the first shifter shaft C passes through a washer W1 engaged with a step part of the first shifter shaft C, the power transmission gear 15T, and a washer W2 and a stop ring 15TS placed on its end portion, and a stop pin 15TP is inserted into the stop ring 15TS and the first shifter shaft C.

A projecting part of the stop pin 15TP is interposed between a pair of projections 51 and 52 projecting toward the inner part of the transmission case 5 as shown in FIG. 31 and FIG. 32, so that the stop ring 15TS as well as the first shifter shaft C do not rotate with rotation of the power transmission gear 15T.

Thus, at the time of F1 for advancing the rotary tolling device 20 at a low speed without driving the same, power from the input shaft E is transmitted in order of 12T, 38TB, 9TA, 39T, 9TB and 29T following reference numerals as shown in FIG. 28 or FIG. 34, so that the output shafts A forming the axle 4 are driven for normal rotation. At this time, the power transmission gear 15T of the first shifter shaft C merely slips and performs no transmission of power, while no power is transmitted to the slipping gear 38TA transmitting the rotary side power, and hence the rotor shaft 2 is not rotated, as shown in FIG. 34.

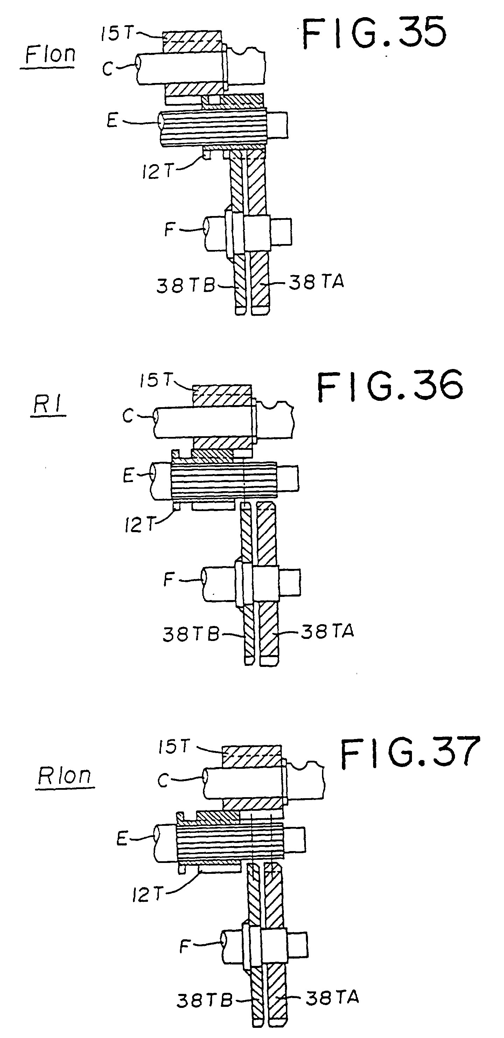

At the time of Flon for advancing the rotary tiller 20 at a low speed while driving the same, the gear 12T and the rotary side slipping gear 38TA engaged with each other so that the output shaft H being the rotor shaft 2 is rotated through 24T, 9TC and 14T in FIG. 28, although the power transmission path toward the axle 4 side remains unchanged, as shown in FIG. 35.

At the time of R1 for reverse-traveling the rotary tiller 20 at a low speed without driving the same, further, as shown in FIG. 36, the power of the gear 12T is temporarily transmitted to the power transmission gear 15T and thereafter transmitted to the traveling side fixed gear 38TB, so that power of reverse rotation is transmitted toward the axle 4 side due to interposition of the single power transmission gear 15T with respect to the advance low speed F1.

At the time of Rlon for reverse-traveling the rotary tiller 20 at a low speed while driving the same, as shown in FIG. 37, power of reverse rotation is transmitted to the traveling side fixed gear 38TB and the rotary side slipping gear 38TA through the power transmission gear 15T, for reverse-rotating the rotor shaft 2 too.

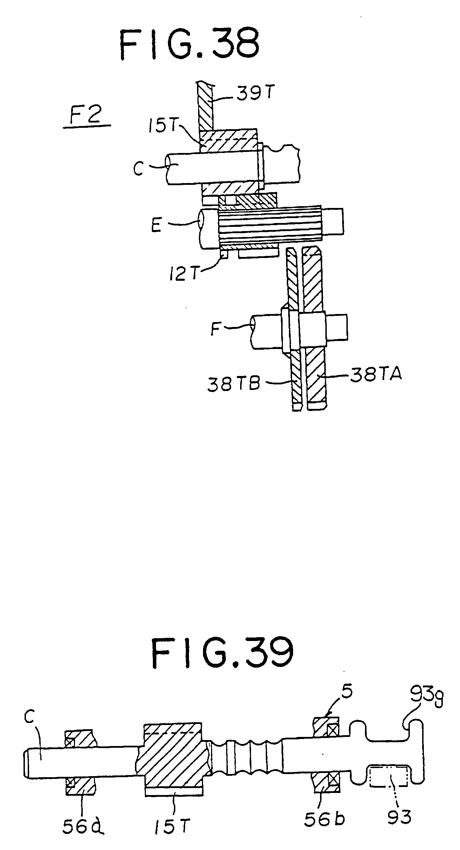

At the time of F2 for advancing the rotary tiller 20 at a high speed without driving the same, further, as shown in FIG. 38, power is directly transmitted from the power transmission gear 15T to the gear 39T of the traveling side intermediate shaft B, for transmitting high speed normal rotation power without interposing the intermediate shaft F.

While the power transmission gear 15T supported on the first shifter shaft C is assumed to be a slipping gear, a receiving part 93g of the first shifter shaft C for the shift lever 93 may be annularly formed so that the first shifter shaft C is rotated along with the power transmission gear 15T as shown in FIG. 39. Alternately in case of requiring no Rlon of reverse-traveling the aforementioned rotary tiller 20 at a low speed while driving the same, the position of Rlon of the guide groove 98 in the guide plate 96 may be omitted so that the shift lever 93 is stopped in the position of R1 for reverse-traveling the rotary tiller 20 at a low speed without driving the same, as shown by phantom lines in FIG. 30.

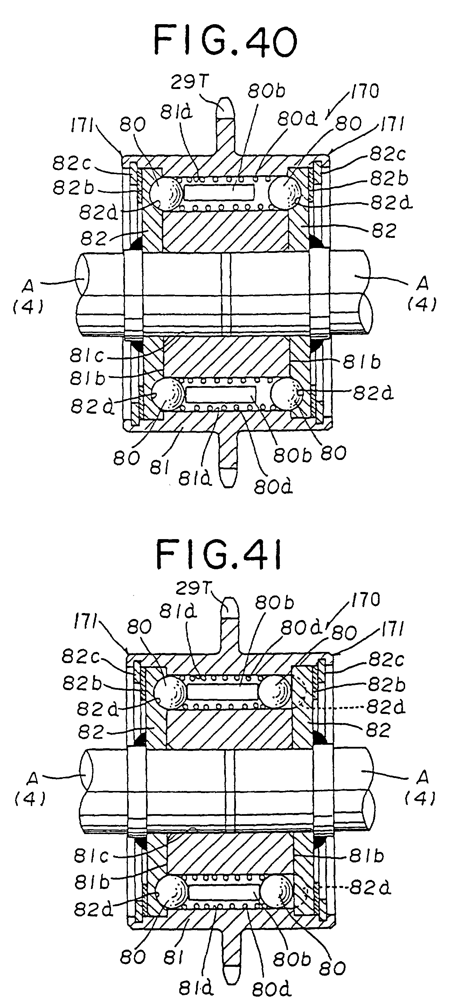

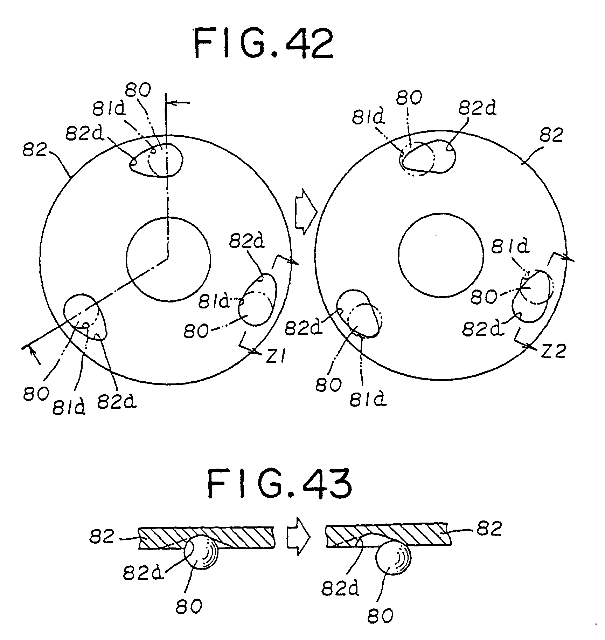

In the aforementioned structure, a power transmission mechanism 170 having a differential mechanism 171 is arranged between the input shaft E and the right and left axles 4 in the interior of the transmission case 5. The differential mechanism 171 comprises a cylindrical primary side transmission member 81 integrating the sprocket 29T, discoidal secondary side transmission members 82 facing its right and left end surfaces, and movable bodies 80 provided between the primary side transmission member 81 and the secondary side transmission members 82, between the right and left output shafts A forming the axle 4 and the sprocket 29T, as shown in FIG. 40 and FIG. 41 in the concrete.

These moving bodies 80 consist of balls made of steel which are rendered movable between engaging positions (FIG. 40) for engaging the primary side transmission member 81 and the secondary side transmission members 82 with each other and releasing positions (right side movable bodies in FIG. 41) for releasing this engagement, so that these movable bodies 80 retract from the engaging positions to the releasing positions to cut off power transmission when loads acting on the secondary side transmission members 82 are in excess of predetermined levels.

In more concrete terms, through holes 81a for passing rightward and leftward (axially) are provided in a several portions, e.g., three portions, in the circumferential direction of the cylindrical primary side transmission member 81, and pairs of balls 80 forced rightward and leftward toward the exterior by coil springs 80a are arranged in the respective through holes 81a.

Circular concave portions 81b are formed in right and left ends of the primary side transmission member 81, and the discoidal secondary side transmission members 82 for welding to fix the respective output shafts A forming the axle 4 are fit in the circular concave portions 81b respectively.

Further, tapered engaging concave portions 82a having tapered surfaces being inclined toward the circumferential direction for movably receiving the respective balls 80 are provided in surfaces of the respective secondary side transmission members 82 facing the circular concave portions 81b, as shown in FIG. 42 and FIG. 43. It is assumed that positions where the balls 80 are deeply in the engaging concave portions 82a are the engaging positions (FIG. 40), and positions where the balls 80 are shallowly in the engaging concave portions 82a to be flush with the planes of the secondary side transmission members 82, i.e., tapered portions are the releasing positions (the right side movable bodies in FIG. 41).

Referring to FIG. 40 and FIG. 41, numeral 80b denotes regulation pins for holding the balls 80 of one side of the right and left sides in the engaging positions when the balls 80 of the other sides are in releasing positions, numeral 81c denotes insertion holes allowing sliding of the respective output shafts A, numeral 82b denotes washers for sliding the secondary side transmission members 82, and numeral 82c denotes retaining rings.

In place of the coil springs 80a, urging force may be attained by employing rubber bodies or by sealing air in the through holes 81a. In place of employing the regulation pins 80b, moreover, close contact lengths of the coil springs 80a may be set in such relation that the balls 80 of one side are hold in the engaging positions when the balls 80 of the other side are in the releasing positions.

Thus, the primary side transmission member 81 and the right and left secondary side transmission members 82-are engaged by the movable bodies 80 in straight traveling of the machine body 1 as shown in FIG. 40, whereby its straight advancing property is maintained.

In case of turning the machine body 1, on the other hand, a large load for straining the rotation acts on the wheel 41 or 42 on the loaded side, and hence twist is caused between the secondary side transmission member 82 and the primary side transmission member 81 on the side where this large load acts, such that the balls 80 separate from the engaging concave portions 82a as shown in FIG. 42 and FIG. 43 and the engagement between the primary side transmission member 81 and the secondary side transmission member 82 is finally released as shown in FIG. 41, whereby power transmission to the output shaft A on the side where the large load acts is cut off and smooth turn can be performed.

In this releasing of the engagement, the balls 80 smoothly separate since the engaging concave portions 82a present tapered surfaces. Further, the balls 80 perform power transmission until the same completely separate from the engaging concave portions 82a, whereby the right and left wheels 41 and 42 rotate at the same speed even if slight unequal force acts on the right and left wheels 41 and 42, and straight advancing property is not inhibited.

While each engaging concave portion 82a is provided with a tapered surface for guiding separation of the ball only on one side in the circumferential direction as shown in FIG. 43, the same may alternatively be inclined symmetrically on both sides in the circumferential direction so that tapered surfaces are provided on both portions of the engaging concave portion 82a as shown by phantom lines in FIG. 43.

In this case, such an advantage is attained that smooth cutoff of the power can be performed not only by forcing out but pulling in the handle 9 since the tapered surfaces are provided on both portions, although smooth cutoff of power is performed only when the handle 9 is rotated in a forced out side, for example, when the tapered surface is formed on one portion.

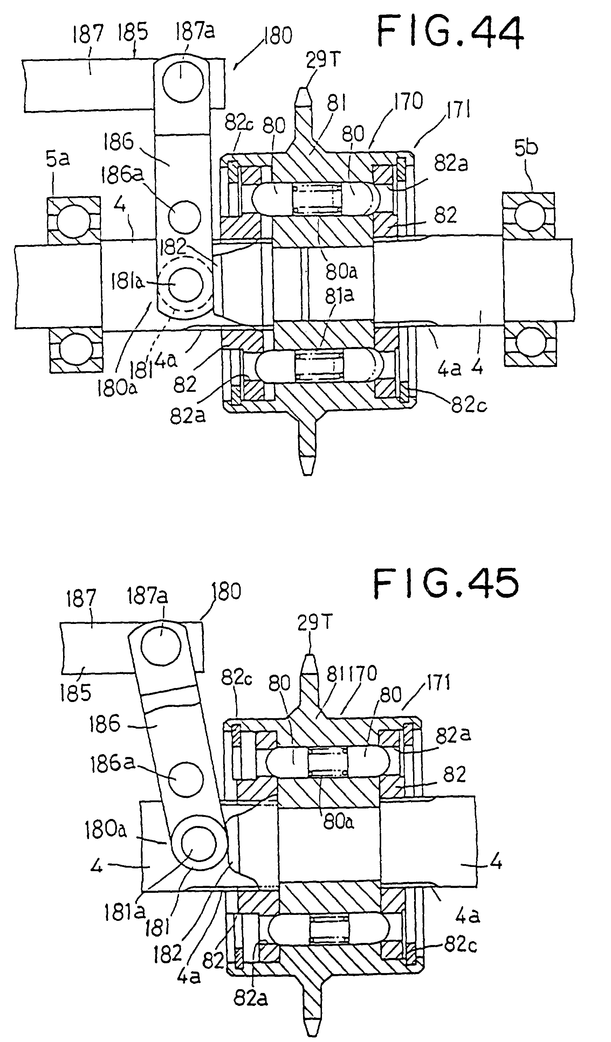

Further, this power transmission mechanism 170 may be provided with a locking mechanism 180 along with the provision of the differential mechanism 171, as shown in FIG. 44 to FIG. 47.

In this case, according to embodiment in FIG. 44 and FIG. 45, the differential mechanism 171 comprises a cylindrical primary side transmission member 81 which is integrally formed with a sprocket 29T connected to interlock with the input shaft E of the transmission case 5 on its outer peripheral part to be freely engaged with the transmission case 5 in a state of extending over the right and left axles 4 supported through ball bearings 5a and 5b, a pair of discoidal right and left secondary side transmission members 82 which are arranged on inner both sides of the same, and a plurality of shell-shaped movable bodies 80 which are interposed between the primary and secondary side transmission members 81 and 82.

The respective movable bodies 80 are rendered movable in the range of engaging portions (indicated by the solid line in FIG. 44) for engaging the primary and secondary transmission members 81 and 82 with each other and transmitting power from the input shaft E to the respective axles 4, and releasing positions (indicated by the phantom line in the same figure) for releasing the engagement by the respective movable bodies 80 to cut off power transmission to the respective axles 4 when torques acting on the secondary side transmission members 82 are in excess of a predetermined level.

Making description in more detail, a plurality of passing through holes 81a are formed rightward and leftward in the primary side transmission member 81 on the same circumferential line thereof for containing pairs of movable bodies 80 in the interior of the respective passing through holes 81a on right and left sides while coil springs 80a are interposed between the pairs of movable bodies 80 for forcing the respective movable bodies 80 toward the exterior of right and left with the coil springs 80a to be positioned in the engaging positions.

Further, the right and left secondary side transmission members 82 are engaged with spline grooves 41Sa and 42Sa provided on the respective axles 4 to be so supported that relative rotation of the secondary side transmission members 82 is impossible but only axial movement is allowed, while a plurality of engaging holes 82a which can be engaged with or disengaged from the respective movable bodies 80 are through-formed in these secondary side transmission members 82 in a plurality of portions on the same circumferential lines thereof. In the respective figures, numeral 82c denotes retaining rings for the right and left secondary side transmission members 82.

Further, the locking mechanism 180 comprises regulation means 180a for holding engaging states and regulating relative rotation of the right and left axles 4 when the respective movable bodies 80 are positioned in the engaging positions and the primary and secondary side transmission members 81 and 82 are engaged with each other, and operation means 185 for operating the regulation means 180a.

In the embodiment of the figure, the operation means 185 comprises an operation arm 186 supported in the transmission case 5 to be swingable rightward and leftward through a pivotal pin 186a, an operating rod 187 which is coupled to an upper end of the arm 186 through a connecting pin 187a to be projected partially outward from the transmission case 5, and a coupling mechanism as described later coupling this operating rod 187 with a lock lever 102 provided on the handle 9.

As the regulation means 180a, moreover, a presser 181 consisting of a roller is supported allowing free rotation on a lower side of the arm 186 through a support pin 181a, and a projection 182 regularly touching the presser 181 is provided on one secondary side transmission member 82 opposed to this presser 181.

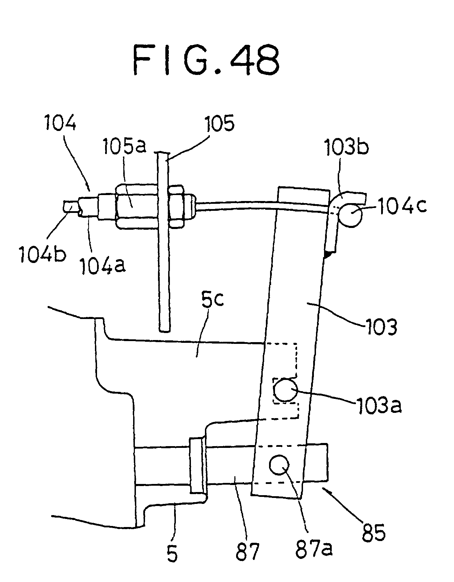

Further, the coupling mechanism coupling the lock lever 102 of the handle 9 and the operating rod 187 is formed as follows: Namely, a mounting part 5c is provided on an outer side of the transmission case 5 in the vicinity of the operating rod 187 so that a lock arm 103 is supported on the mounting part 5c to be swingable rightward and leftward through a pivotal pin 103a and a projecting portion of the operating rod 187 from the transmission case 5 is coupled to a lower end of this lock arm 103 through the connecting pin 187a, while a wire receiver 103b is fixed to an upper side of the lock arm 103, as shown in FIG. 48.

Further, an operating wire 104 is coupled to the lock arm 103, and the operating wire 104 consists of an outer wire 104a and an inner wire 104b inserted in its interior, so that one longitudinal end of this outer wire 104a is supported by an outer receiver 105a mounted on a guide body 105 while a drum part 104c fixed to one longitudinal end of the inner wire 104b is supported by the wire receiver 103b fixed to the upper end portion of the lock arm 103.

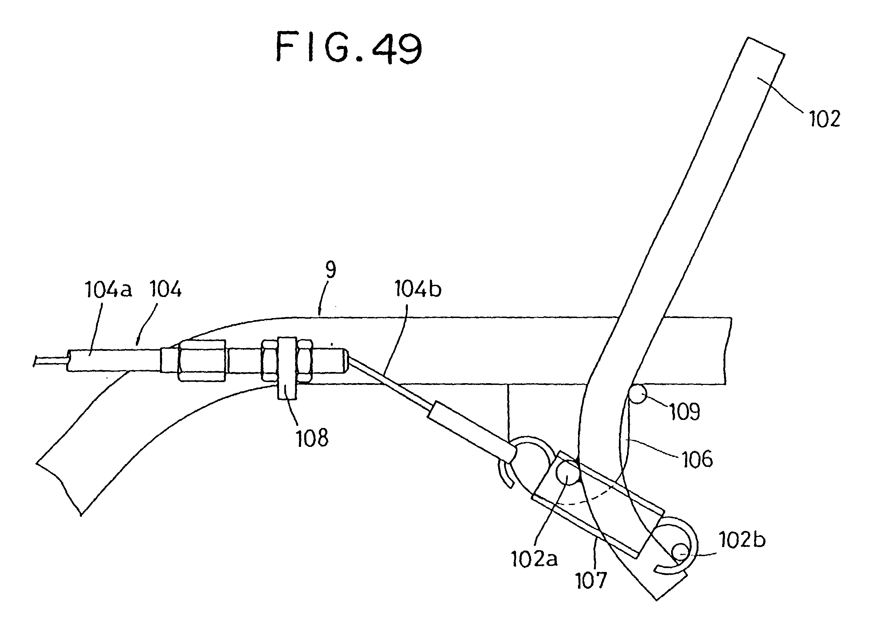

As shown in FIG. 49, further, a bracket 106 is provided on a base side of the handle 9 for supporting the lock lever 102 allowing frontward and rearward swing on the bracket 106 through a pivotal shaft 102a and a spring receiver 102b for holding a spring 107 is provided on a lower end side of the lock lever 102, while an outer receiver 108 for the outer wire 104a in the wire 104 is mounted on the handle 9 for making the outer receiver 108 support the other longitudinal end of the outer wire 104a and the inner wire 104b is held by the spring 107. Referring to FIG. 49, numeral 109 denotes a stopper of the lock lever 102.

An operation by this structure is now described. When difference between torques applied to the right and left axles 4 is relatively small in an ordinary tilling operation, the primary and secondary side transmission members 81 and 82 in the differential mechanism 171 are held in unlocked states without operating to swing the lock lever 102, i.e., without operating the regulation means 108a of the lock mechanism 180. Then, the respective movable bodies 80 interposed between the primary and secondary side transmission members 81 and 82 are positioned in the engaging positions (indicated by the solid line in FIG. 44) for engaging the primary and secondary side transmission members 81 and 82 by the urging force of the coil springs 80a so that power is transmitted from the input shaft E of the transmission case 5 to the sprocket 29T of the primary side transmission member 81, the primary side transmission member 81, the movable bodies 80, the right and left secondary side members 82, and the right and left wheels 41 and 42 respectively, whereby straight advancing property of the machine body 1 can be ensured.

In case of performing right turn of the machine body 1 in the aforementioned state, for example, the operator turn-operates the handle 9 about the right side wheel 42 so that a large torque for straining rotation acts on the right side wheel 42 to which the torque is applied, whereby the right side movable body 80 on which this large torque acts retracts from the engaging position (indicated by the solid lines in FIG. 44) to the releasing position (indicated by the phantom line in the same figure).

Thus, the engagement between the primary side transmission member 81 and the secondary side transmission member 82 by the movable body 80 is released and power transmission from the primary side transmission member 81 to the right secondary side transmission member 82 supplied with the torque is cut off so that rotation of the right axle 4 supplied with the torque, i.e., the right wheel 41, is stopped.

On the other hand, power transmission to the left secondary side transmission member 82 supplied with no torque, i.e., the left axle 4, is continued, whereby right turn of the machine body 1 about the rotation-stopped right wheel 41 can be readily performed only by the turning operation of the handle 9. Similarly, left turn of the machine body 1 can also be readily performed only by a handle operation.

When the difference between the torques applied to the right and left axles 4 remarkably fluctuates due to the field conditions etc. or when ridge passage is performed, the lock lever 102 is operated to swing to lock the regulation means 180a of the lock mechanism 180, as shown in FIG. 45. Namely, the operating arm 186 is swung counterclockwise about its pivotal pin 186a through the operating rod 187 by operating to swing the lock lever 102 and operating to strain the inner wire 104b of the operating wire 104, for making the presser 181 supported on the operating arm 186 press the projection 182 provided on the left secondary side transmission member 82.

Then, this secondary side transmission member 82 is moved rightward along a spline groove 4a provided in the left axle 4 and following this, the left movable body 80 is pressed rightward, whereby the coil springs 80a interposed between the right and left movable bodies 80 are compressed.

The compression of the coil springs 80a strengthens the force for engaging the right and left movable bodies 83 in the respective engaging holes 82a of the right and left side transmission members 82, i.e., the right and left movable bodies 80 are brought not to separate from the respective engaging holes 82a with slight torques, whereby the primary and secondary side transmission members 81 and 82 are held in locked states by the right and left movable bodies 83 and power transmission to the right and left axles 4 is performed together.

Even if the difference between the torques applied to the right and left axles 4 fluctuates, therefore, neither locking *nor* unlocking of the primary and secondary side transmission members 81 and 82 not intended by the operator is frequently performed but a stable straight traveling property of the machine body 1 can be ensured while ridge passage by the machine body 1 can also be reliably performed.

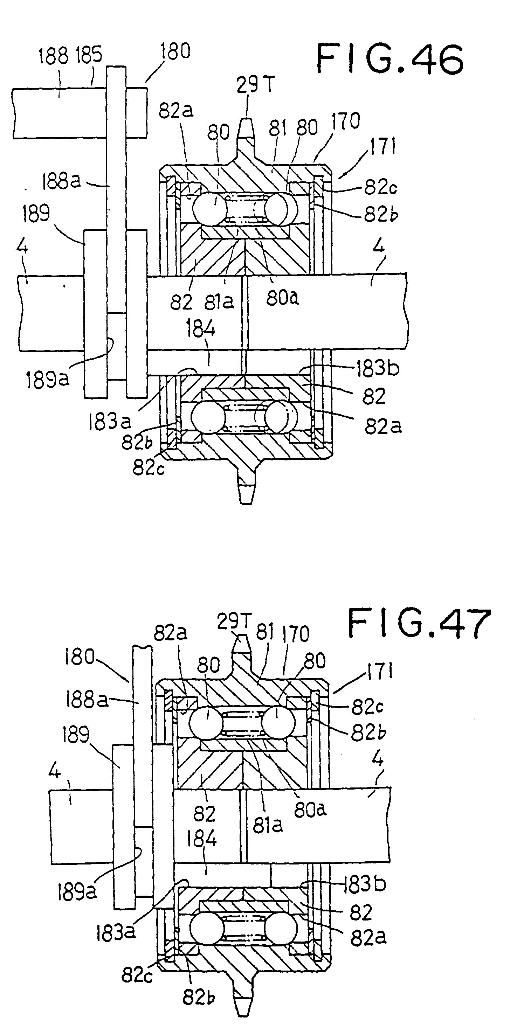

In the embodiment of FIG. 46 and FIG. 47, further, the machine comprises the primary side transmission member 81, the secondary side transmission members 82, and the plurality of movable bodies 80 consisting of the balls interposed between these primary and secondary side transmission members 81 and 82 as the differential mechanism 171 similarly to the case of the aforementioned embodiment, and these respective movable bodies 80 engage the primary and secondary side transmission members 81 and 82 with each other to render the same movable in the range between the engaging positions (indicated by the solid line in FIG. 46) for transmitting the power to the respective axles 4 and the releasing positions (indicated by the phantom line in the same figure) for releasing the engagement by the respective movable bodies 80 and cutting off the power transmission to the respective axles 4 when the torques acting on the secondary side transmission members 82 are in excess of a predetermined level.

In the same figure, washers 82b are provided on outer sides of the right and left secondary side transmission members 82 respectively, and retaining rings 82c are mounted on outer portions of the washers 82b.

As the regulation means 180a of the lock mechanism 180, further, first and second engaging portions 183a and 183b consisting of through holes which are opposed to each other are formed on diametral inner peripheral sides of the right and left secondary side transmission members 82, while an engaging body 184 consisting of a pin which is projected into the first engaging portion 183a and which can be engaged with or disengaged from the second engaging portion 183b from the engaging portion 183a is mounted on an outer surface of an operating body 189 to be described later.

As the operating means 185 of the lock mechanism 180, moreover, in the embodiment of the same figure, the machine comprises a lock fork shaft 188 which is coupled to the lock lever 102 of the handle 9 through a coupling mechanism which is similar to the aforementioned one to be projected toward an exterior of the transmission case 5, while a fork shifter 188a is mounted on its top part and the operating body 189 having an engaging groove 189a in which the fork shifter 188a is engaged is slidably mounted on the left axle 41S.

An operation in the above embodiment is now described. First, when the difference between torques applied to the right and left wheels 41 and 42 is relatively small in an ordinary tilling operation, the engaging body 184 is retracted from the second engaging portion 183b without operating to swing the lock lever 102 as indicated by the solid line in FIG. 46, for holding the primary and secondary side transmission members 81 and 82 in unlocked states. Then, the respective movable bodies 80 are positioned in the engaging positions (indicated by the solid line in FIG. 46) for engaging the primary and secondary side transmission members 81 and 82 with each other by the urging force of the coil springs 80a so that the power is transmitted to the right and left wheels 41 and 42 respectively, whereby the straight advancing property of the machine body 1 can be ensured.

In case of turning the machine body 1 rightward in the aforementioned state, for example, the right movable body 80 on which large torque acts retracts from the engaging position (indicated by the solid line in FIG. 46) to the releasing position (indicated by the phantom line in the same figure) so that power transmission from the primary side transmission member 81 to the right secondary transmission member 82 supplied with the torque is cut off for stopping rotation of the right axle 4 supplied with the torque, i.e., the right wheel 41 similarly to the aforementioned case, whereby right turn of the machine body 1 about the rotation-stopped right wheel 41 can be readily performed by only a handle operation.

When the difference between the torques applied to the right and left axles 4 remarkably fluctuates due to the field conditions etc. or when ridge passage is performed, the lock lever 102 is swung to strain the operating wire 104 thereby making the operating body 189 move rightward through the fork shifter 188a and making the engaging body 184 insert from the first engaging portion 183a to the second engaging portion 183b, as shown in FIG. 47.

Then, the right and left secondary side transmission members 82, i.e., the right and left axles 4, are locked by the engaging body 184 not to be rotated relatively and power transmission from the primary side transmission member 81 to the right and left axles 4 is performed together, whereby neither locking nor unlocking of the primary and secondary transmission members 81 and 82 not intended by the operator is frequently performed but a stable straight traveling property of the machine body 1 can be ensured even if the difference between the torques applied to the right and left axles 4 remarkably fluctuates, while ridge passage of the machine body 1 can also be reliably performed.

Particularly, according to the aforementioned embodiment of FIG. 44 and FIG. 45, there is such a possibility that the movable bodies 80 retract from the engaging positions to the releasing positions against the pressing force of the presser 181 of the regulation means 180a to unlock the right and left secondary side transmission members 82 without intention when the difference between the torques applied to the right and left axles 4 is extremely large. According to the embodiment of FIG. 46 and FIG. 47, on the other hand, locking of the right and left secondary side transmission members 82, i.e., the right and left axles 4 is performed by engaging the engaging body 184 of the regulation means 180a with the right and left engaging portions 183a and 183b, whereby reliable locking between the right and left axles 4 can be performed without performing an unlocking operation without intention even if large torque difference is applied to the right and left axles 4, and a stable straight traveling property of the machine body 1 can be further excellently ensured.

As to the engaging body 184, right and left sides of the right and left secondary side transmission members 82 may be inserted in and engaged with the respective engaging portions 183a and 183b.

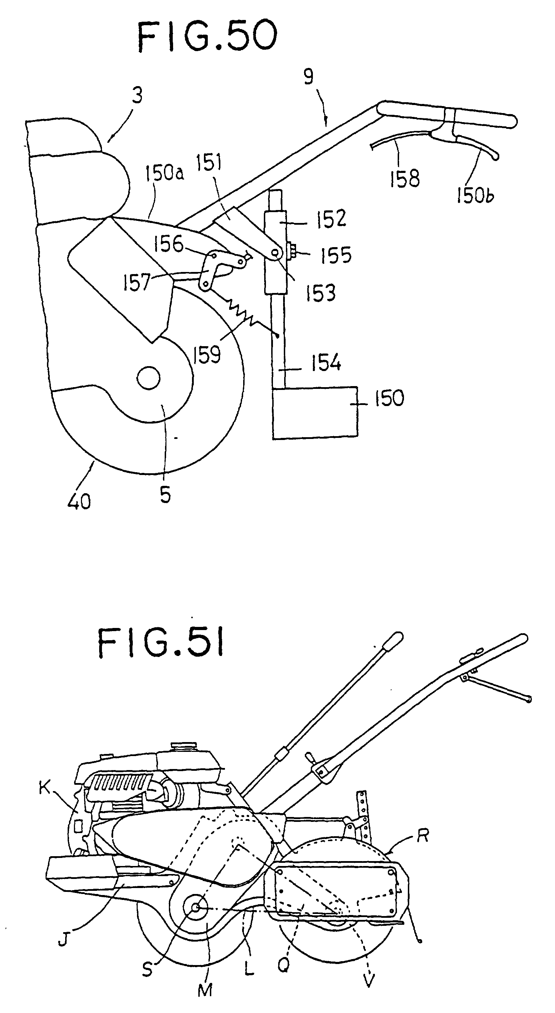

Further, it is also possible to mount a levelling rake 150 for levelling cultivated soil by the rotary tiller 20 on a lower position of the handle 9 at the back of the traveling wheels 40 in the aforementioned managing machine, as shown in FIG. 50.

Namely, a bracket 151 is fixedly provided on a front lower portion of the handle 9 for making the bracket 151 vertically swingably support a cylindrical body 152 along the vertical direction by a pivotal shaft 153, while a support rod 154 extending upward from the levelling rake 150 is supported on the cylindrical body 152 to be vertically adjustable by an adjusting bolt 155.

Further, a mounting part 150a is provided on a rear portion of the transmission case 5 for making this mounting part 150a support a crank arm 157 allowing frontward and rearward swing through a pivotal shaft 156, and an end of this crank arm 157 and an operating lever 150b mounted on the handle 9 are coupled with each other by an operating wire 158, while a tension spring 159 is extended between the crank arm 157 and the support rod 154 of the levelling rake 150.

In employment of the levelling rake 150, the support rod 154 and the cylindrical body 152 are held in substantially vertical position as shown in the same figure so that the levelling rake 150 is positioned at the back of the traveling wheels 40, whereby soil cultivated by the rotary tiller 20 can be uniformly levelled by the levelling rake 150 even if the same is trodden by the traveling wheels 40.

Although the levelling rake 150 is provided, the cylindrical body 152 can be retracted rearward about the pivotal shaft 153 along with the levelling rake 150 and the support rod 154 in groove opening in the tilling operation by swinging the crank arm 157 counterclockwise about the pivotal shaft 156 by an operation of the operating lever 150b, and following this, by weakening the tension of the tension spring 159, the groove opening operation can be readily performed with no hindrance by the levelling rake 150 at the time of groove opening.

### Industrial Applicability

As above described, the present invention is useful as an agricultural machine performing a tilling operation, various management operations in agricultural operations and the like, and can be suitably employed in particular as a walking type agricultural machine prepared by mounting a rotary tiller etc. on a rotor shaft for performing the tilling operation etc.

## Claims

1. An agricultural machine comprising an engine (3), an axle (4) supporting a travelling wheel (40), and a rotor shaft (2) provided with a rotary tiller (20) and driven by the engine (3) on a machine body (1), wherein the engine (3), axle (4) and rotor shaft (2) are arranged along the front-rear horizontal direction of the machine body (1) in order of the rotor shaft (2), the engine (3) and the axle (4), and **characterised by** a transmission casing (5) containing a transmission to which power from the engine (3) is inputted, and a casing (6) containing rotary power transmission means for taking power from the transmission to the rotor shaft (2) in a branched manner, the casing (6) being arranged in a substantially horizontal manner along a line segment (L) connecting the axle (4) with the rotor shaft (2).

2. An agricultural machine according to claim 1, wherein the rotary tiller (20) and the engine (3) are arranged in an overlapping relationship with each other in plan view.

3. An agricultural machine according to claim 1 or 2, wherein the rotary tiller (20) has a rotary cover (22), and the rotary cover (22) and the engine (3) are supported by a common frame (10) together.

4. An agricultural machine according to any preceding claim, wherein a ridge plower (60) for moving soil tilled by the rotary tiller (20) aside to form a ridge is provided between the rotary tiller (20) and the traveling wheel (40).

5. An agricultural machine according to any preceding claim, further comprising an elevational wheel (7) making a support height with respect to the machine body (1) changeable between a working height and a non-working height, and wherein the elevational wheel (7) is supported through a swing arm (70) pivotally supported by the machine body (1) for making the support height of the elevational wheel (7) changeable by changing a swing angle of said swing arm (70).

6. An agricultural machine according to any preceding claim, further comprising a clutch mechanism (49) for transmitting the power from the engine (3) to the axle (4), a handle (9) having right and left handle base parts (901) extending from the machine body (1) and a grip part (90) coupling free ends of the handle base parts (901), and a clutch lever (91) held by said handle (9) for switching on/off said clutch mechanism (49), wherein
the clutch lever (91) has an operating part (912) extending along said grip part (90) and being approachable to and separable from said grip part (90), the operating part (912) being provided with a grasp part (913) overlapping with said grip part (90), and wherein
a non-overlapping part (100) which is not mutually overlapping is formed on at least one of the operating part (912) of said clutch lever (91) and the grip part (90) of the handle (9).

7. An agricultural machine according to any preceding claim, further comprising a shift lever (93) for changing the wheel speed and switching on/off the rotary tiller (20), a shifter shaft (C) to be displaced in the axial direction in association with an operation of the shift lever (93), and a power transmission gear (15T) to be displaced in the axial direction following the axial directional displacement of said shifter shaft (C) for changing a transmission path of power to be taken out on an output side in accordance with the displacement position.

8. An agricultural machine according to any preceding claim, further comprising a power transmission mechanism (170) for transmitting power to the right and left axles (4, 4), the power transmission mechanism (170) having a differential mechanism (171), wherein
said differential mechanism (171) includes a primary side transmission member (81) to which power is inputted, a pair of right and left secondary side transmission members (82) being coupled to the right and left axles (4, 4) respectively, and a movable body (80) being provided between the primary side transmission member (81) and secondary side transmission members (82), and
said movable body (80) is rendered movable between an engaging position for engaging the primary side transmission member (81) and the secondary side transmission members (82) with each other for transmitting power to the respective axles (4, 4), and a releasing position for releasing the engagement and cutting off the transmission of the power to the respective axles (4, 4) when a load acting on the secondary side transmission member (82) is in excess of a predetermined level.

9. An agricultural machine according to claim 8, wherein the power transmission mechanism (170) further has a locking mechanism (180), and
said locking mechanism (180) includes regulation means (180a) for regulating relative rotation of the right and left axles (4, 4).

10. An agricultural machine according to claim 9, wherein the regulation means (180a) of the locking mechanism (180) includes a presser (181) pressing the movable body (80) in a direction of increasing engaging resistance between the primary side transmission member (81) and the secondary side transmission members (82).

11. An agricultural machine according to claim 9, wherein the regulation means (180a) of the locking mechanism (180) includes engaging parts (183a) and (183b) formed on the pair of right and left secondary side transmission members (81) and (82) and an engaging body (184) for engaging with or disengaging from both of the engaging parts (183a) and (183b).

## Patentansprüche

1. Landwirtschaftliche Maschine mit einem Motor (3), einer ein Fahr-Rad (40) stützenden Achse (4) und einer Rotorwelle (2), die mit einer Drehfräse (20) versehen und vom Motor (3) auf dem Maschinengestell (1) angetrieben ist, wobei der Motor (3), die Achse (4) und die Rotorwelle (2) in horizontaler Richtung von der Vorder- zur Rückseite des Maschinengestells (1) in der Reihenfolge Rotorwelle (2), Motor (3) und Achse (4) angeordnet sind, und **gekennzeichnet durch** ein Getriebegehäuse (5), das ein Getriebe enthält, an das Kraft von dem Motor (3) übertragen wird, und ein Gehäuse (6), das eine drehende Kraftübertragungseinrichtung enthält, die Kraft vom Getriebe zur Rotorwelle (2) abzweigend überträgt, wobei das Gehäuse (6) im wesentlichen horizontal entlang einem Liniensegment (L) angeordnet ist, das die Achse (4) mit der Rotorwelle (2) verbindet.

2. Landwirtschaftliche Maschine nach Anspruch 1, bei der die Drehfräse (20) und die Maschine (3) in Draufsicht einander überlappend angeordnet sind.

3. Landwirtschaftliche Maschine nach Anspruch 1 oder 2, bei der die Drehfräse (20) eine drehende Abdeckung (22) hat und die drehende Abdeckung (22) und der Motor (3) zusammen durch einen gemeinsamen Rahmen (10) gestützt sind.

4. Landwirtschaftliche Maschine nach einem der vorhergehenden Ansprüche, bei der ein Häufelpflug (60) zwischen der Drehfräse (20) und dem Fahr-Rad (40) vorgesehen ist, um durch die Drehfräse (20) gefräste Erde zur Bildung eines Grats seitwärts zu bewegen.

5. Landwirtschaftliche Maschine nach einem der vorhergehenden Ansprüche, ferner mit einem höhenverstellbaren Rad (7), das das Verstellen der Stützhöhe in bezug auf das Maschinengestell (1) zwischen einer Arbeitshöhe und einer Ruhehöhe ermöglicht, und wobei das höhenverstellbare Rad (7) durch einen vom Maschinengestell (1) schwenkbar gestützten Schwenkarm (70) gestützt ist, um das Verstellen der Stützhöhe des höhenverstellbaren Rades (7) durch Verstellen des Schwenkwinkels des Schwenkarms (70) zu ermöglichen.

6. Landwirtschaftliche Maschine nach einem der vorhergehenden Ansprüche, ferner mit einem Kupplungsmechanismus (49) zum Übertragen der Kraft vom Motor (3) auf die Achse (4), einem Griff (9) mit einem rechten und einem linken Griffbasisteil (901), die sich von dem Maschinengestell (1) erstrecken, und einem Griffteil (90), das freie Enden der Griffbasisteile (901) verbindet, und einem vom Griff (9) gehaltenen Kupplungshebel (91) zum Ein-/Ausschalten des Kupplungsmechanismus (49), wobei
der Kupplungshebel (91) ein Betätigungsteil (912) aufweist, das sich entlang dem Griffteil (90) erstreckt und an das Griffteil (90) annäherbar und von diesem trennbar ist, wobei das Betätigungsteil (912) mit einem Greifteil (913) versehen ist, das mit dem Griffteil (90) überlappt, und wobei
ein nicht gegenseitig überlappendes Nichtüberlappungsteil (100) zumindest an dem Betätigungsteil (912) des Kupplungshebels (91) und dem Griffteil (90) des Griffs (9) ausgebildet ist.

7. Landwirtschaftliche Maschine nach einem der vorhergehenden Ansprüche, ferner mit einem Schalthebel (93) zum Verändern der Radgeschwindigkeit und zum Ein-/Ausschalten der Drehfräse (20), einer Schaltwelle (C) die in Verbindung mit der Betätigung des Schalthebels (93) in axialer Richtung verschiebbar ist, und einem Kraftübertragungszahnrad (15T), das im Anschluß an eine axiale Richtungsverschiebung der Schaltwelle (C) axial verschiebbar ist, um den Übertragungsweg der auf die Ausgangsseite zu übertragenden Kraft entsprechend der Verschiebungsposition zu verändern.

8. Landwirtschaftliche Maschine nach einem der vorhergehenden Ansprüche, ferner mit einem Kraftübertragungsmechanismus (170) zum Übertragen von Kraft auf die rechte und die linke Achse (4, 4), wobei der Kraftübertragungsmechanismus (170) einen Differentialmechanismus (171) aufweist, wobei
der Differentialmechanismus (171) ein primäres Übertragungsteil (81), in das Kraft eingeleitet wird, ein Paar aus einem rechten und einem linken sekundären Übertragungsteil (82), die mit der rechten bzw. der linken Achse (4, 4) gekoppelt sind, und einen bewegbaren Körper (80) aufweist, der zwischen dem primären Übertragungsteil (81) und den sekundären Übertragungsteilen (82) vorgesehen ist, und
wobei der bewegbare Körper (80) zwischen einer Eingriffsposition, in der das primäre Übertragungsteil (81) und die sekundären Übertragungsteile (82) in Eingriff gebracht sind, um Kraft auf die entsprechenden Achsen (4, 4) zu übertragen, und einer Löseposition bewegbar ist, um den Eingriff zu lösen und die Kraftübertragung an die jeweiligen Achsen (4, 4) zu unterbrechen, wenn eine auf das sekundäre Übertragungsteil (82) wirkende Last einen vorbestimmten Grad übersteigt.

9. Landwirtschaftliche Maschine nach Anspruch 8, bei der der Kraftübertragungsmechanismus (170) ferner einen Verriegelungsmechanismus (180) aufweist, und
der Verriegelungsmechanismus (180) eine Regeleinrichtung (180a) zum Regeln der relativen Drehung der rechten und der linken Achse (4, 4) aufweist.

10. Landwirtschaftliche Maschine nach Anspruch 9, bei der die Regeleinrichtung (180a) des Verriegelungsmechanismus (180) ein Druckstück (181) aufweist, das den bewegbaren Körper (80) in eine Richtung drückt, in der der Eingriffswiderstand zwischen dem primären Übertragungsteil (81) und den sekundären Übertragungsteilen (82) zunimmt.

11. Landwirtschaftliche Maschine nach Anspruch 9, bei der die Regeleinrichtung (180a) des Verriegelungsmechanismus (180) Eingreifteile (183a) und (183b), die an dem rechten und dem linken sekundären Übertragungsteil (81) und (82) ausgebildet sind, und einen Eingreifkörper (184) zum Eingreifen in oder Lösen von beiden Eingreifteilen (183a) und (183b) aufweist.

## Revendications

1. Machine agricole comprenant un moteur (3), un essieu (4) supportant des roues motrices (40), et un arbre de rotor (2) pourvu d'un dispositif de labourage rotatif (20) et entraîné par le moteur (3) sur un châssis de machine (1), dans laquelle le moteur (3), l'essieu (4) et l'arbre de rotor (2) sont agencés dans la direction horizontale avant - arrière du châssis de machine (1) dans l'ordre arbre de rotor (2), moteur (3) et essieu (4), **caractérisée par** un carter de transmission (5) contenant une transmission à laquelle est appliquée la puissance du moteur (3), et un carter (6) contenant un moyen de transmission de puissance de rotation qui prend une puissance sur la transmission et la transmet à l'arbre de rotor (2) d'une manière branchée, le carter (6) étant agencé d'une manière sensiblement horizontale le long d'un segment de ligne (L) reliant l'essieu (4) à l'arbre de rotor (2).

2. Machine agricole selon la revendication 1, dans laquelle le dispositif de labourage rotatif (20) et le moteur (3) sont agencés en relation de chevauchement mutuel en vue en plan.

3. Machine agricole selon la revendication 1 ou 2, dans laquelle le dispositif de labourage rotatif (20) comprend un capot de dispositif rotatif (22), et le capot (22) et le moteur (3) sont supportés ensemble par une structure commune (10).

4. Machine agricole selon une quelconque des revendications précédentes, dans laquelle un soc verseur (60) pour déplacer par côté la terre labourée par le dispositif de labourage rotatif (20) de manière à former une crête de sillon est prévu entre le dispositif de labourage rotatif (20) et la roue motrice (40).

5. Machine agricole selon une quelconque des revendications précédentes, comprenant en outre une roulette de relevage (7) qui permet de modifier une hauteur de support par rapport au châssis de machine (1) entre une hauteur de travail et une hauteur de repos, et dans laquelle la roulette de relevage (7) est supportée par un bras oscillant (70) monté de façon pivotante sur le châssis de machine (1) afin de permettre le réglage de la hauteur de support de la roulette de relevage (7) par modification d'un angle d'inclinaison du dit bras oscillant (70).

6. Machine agricole selon une quelconque des revendications précédentes, comprenant en outre un mécanisme d'embrayage (49) pour transmettre la puissance du moteur (3) à l'essieu (4), un guidon (9) ayant des parties de base de guidon droite et gauche (901) qui s'étendent à partir du châssis de machine (1) et une partie de préhension (90) qui relie les extrémités libres des parties de base de guidon (901), et un levier d'embrayage (91) tenu par le dit guidon (9) pour embrayer/débrayer le dit mécanisme d'embrayage (49), dans laquelle le levier d'embrayage (91) comprend une partie de manoeuvre (912) qui s'étend le long de la dite partie de préhension (90) et peut être rapprochée et éloignée de la dite partie de préhension (90), la partie de manoeuvre (912) comprenant une partie de prise (913) en chevauchement avec la dite partie de préhension (90), et dans laquelle une partie non en chevauchement (100), qui n'est pas en chevauchement mutuel, est formée sur au moins une de la partie de manoeuvre (912) du dit levier d'embrayage (91) et de la partie de préhension (90) du guidon (9).

7. Machine agricole selon une quelconque des revendications précédentes, comprenant en outre un levier de changement de vitesse (93) pour changer la vitesse des roues et démarrer / arrêter le dispositif de labourage rotatif (20), un arbre de changement de vitesse (C) qui se déplace dans la direction axiale en association avec une manoeuvre du levier de changement de vitesse (93), et un pignon de transmission de puissance (15T) qui se déplace dans la direction axiale à la suite du déplacement directionnel axial de l'arbre de changement de vitesse (C) afin de changer un chemin de transmission de la puissance fournie sur un côté de sortie en fonction de la position de déplacement.

8. Machine agricole selon une quelconque des revendications précédentes, comprenant en outre un mécanisme de transmission de puissance (170), pour transmettre la puissance aux essieux droit et gauche (4, 4), le mécanisme de transmission de puissance (170) comportant un mécanisme différentiel (171), dans laquelle
le dit mécanisme différentiel (171) comprend un élément de transmission côté primaire (81) auquel une puissance est appliquée, deux éléments de transmission côté secondaire de droite et de gauche (82) étant couplés aux essieux droit et gauche (4, 4) respectivement, et une pièce mobile (80) est prévue entre l'élément de transmission côté primaire (81) et les éléments de transmission côté secondaire (82), et
la dite pièce mobile (80) est rendue déplaçable entre une position d'engagement, pour couplage de l'élément de transmission côté primaire (81) et des éléments de transmission côté secondaire (82) afin de transmettre la puissance aux essieux respectifs (4, 4), et une position de dégagement pour supprimer le couplage et couper la transmission de la puissance aux essieux respectifs (4, 4) lorsqu'une charge agissant sur l'élément de transmission côté secondaire (82) dépasse une valeur prédéterminée.

9. Machine agricole selon la revendication 8, dans laquelle le mécanisme de transmission de puissance (170) comprend en outre un mécanisme de blocage (180), et le dit mécanisme de blocage (180) comprend un moyen de régulation (180a) pour réguler la rotation relative des essieux droit et gauche (4, 4).

10. Machine agricole selon la revendication 9, dans laquelle le moyen de régulation (180a) du mécanisme de blocage (180) comprend un élément de pression (181) qui presse la pièce mobile (80) dans une direction d'augmentation de la force de couplage entre l'élément de transmission côté primaire (81) et les éléments de transmission côté secondaire (82).

11. Machine agricole selon la revendication 9, dans laquelle le moyen de régulation (180a) du mécanisme de blocage (180) comprend des parties de couplage (183a) et (183b) formées sur la paire d'éléments côté secondaire droit et gauche (81) et (82), et une pièce de couplage (184) pour venir en prise avec les deux parties de couplage (183a) et (183b) ou se dégager de celles-ci.
